# EUROPEAN PATENT APPLICATION

(11) **EP 4 401 469 A1**
(43) Date of publication of application: **17.07.2024**
(21) Application number: 22877954.2
(22) Date of filing: 08.10.2022
(51) Int. Cl.: H04W 36/00, H04W 36/08

(54) **CELL RESELECTION METHOD AND COMMUNICATION APPARATUS**

(30) Priority: 09.10.2021 CN 202111177627; 07.01.2022 CN 202210017906
(71) Applicant: Huawei Technologies Co., Ltd., Shenzhen, Guangdong 518129 (CN)
(72) Inventor: ZHANG, Roujia, Shenzhen, Guangdong 518129 (CN); SUN, Fei, Shenzhen, Guangdong 518129 (CN)
(74) Representative: Pfenning, Meinig & Partner mbB
(86) International application number: PCT/CN2022/123824
(87) International publication number: WO 2023/056938

(57) **Abstract**

This application provides a cell reselection method and a communication apparatus, to provide a cell reselection solution in a network slicing scenario, so as to improve a cell reselection success rate and improve communication efficiency. In the method, a terminal device determines priority information of a target network slice group, where the priority information indicates a priority of the target network slice group; and the terminal device performs cell reselection based on a cell frequency that is associated with the target network slice group and determined based on the priority information. In some implementations, the target network slice group includes a network slice that the terminal device expects to access or a default network slice.

## Description

This application claims priorities to Chinese Patent Application No. 202111177627.0, filed with the China National Intellectual Property Administration on October 9, 2021 and entitled "CELL RESELECTION METHOD AND COMMUNICATION APPARATUS", and to Chinese Patent Application No. 202210017906.9, filed with the China National Intellectual Property Administration on January 7, 2022 and entitled "CELL RESELECTION METHOD AND COMMUNICATION APPARATUS", both of which are incorporated herein by reference in their entireties.

### TECHNICAL FIELD

This application relates to the field of wireless technologies, and in particular, to a cell reselection method and a communication apparatus.

### BACKGROUND

With development of mobile communication technologies, various new services and application scenarios continuously emerge, and requirements of these services on network functions, connection performance, security, and the like are greatly different. To meet different service requirements, a customized network service may be provided for a user through network slicing (Network Slicing).

However, in a network slicing scenario, how a terminal device performs cell reselection is an urgent technical problem to be resolved.

### SUMMARY

This application provides a cell reselection method and a communication apparatus, applied to a network slicing scenario.

A first aspect of this application provides a cell reselection method. The method is performed by a terminal device, or the method is performed by some components (for example, a processor, a chip, or a chip system) in a terminal device, or the method may be implemented by a logical module or software that can implement all or some functions of a terminal device. In the first aspect and a possible implementation of the first aspect, an example in which the cell reselection method is performed by a terminal device is used for description. In the method, the terminal device determines priority information of a target network slice group, where the priority information indicates a priority of the target network slice group; and the terminal device performs cell reselection based on a cell frequency that is associated with the target network slice group and determined based on the priority information.

Based on the foregoing technical solution, after the terminal device determines the priority information indicating the target network slice group, in a process of performing cell reselection by the terminal device, the terminal device performs cell reselection based on the cell frequency that is associated with the target network slice group and determined based on the priority information. In other words, the terminal device performs cell reselection based on a cell frequency that is associated with the target network slice group and determined based on the priority of the target network slice group. In a network slicing scenario, when the cell frequency used by the terminal device in the cell reselection process is configured based on a granularity of a network slice group, the solution in which the terminal device performs cell reselection based on the cell frequency that is associated with the target network slice group and determined based on the priority information enables the terminal device to perform cell reselection by using a network slice group as a granularity for cell reselection. Therefore, the cell reselection solution is applicable to a scenario in which communication is performed based on a network slice group, and can improve a cell reselection success rate and communication efficiency.

In addition, in a cell reselection manner in which the terminal device determines a target cell based on priority information of a network slice group, the network device uses cell reselection information (for example, cell frequency information) associated with the network slice group as one piece of information to be sent to the terminal device, and uses slice information of a network slice included in the network slice group as another piece of information to be sent to the terminal device. In the separate sending manner (compared with a manner of sending through a same broadcast message), information transmission security can be improved, and broadcast overheads can be reduced.

In this embodiment of this application, the target network slice group includes one or more network slice groups, and each network slice group includes one or more network slices.

A second aspect of this application provides a cell reselection method. The method is performed by a terminal device, or the method is performed by some components (for example, a processor, a chip, or a chip system) in a terminal device, or the method may be implemented by a logical module or software that can implement all or some functions of a terminal device. In the second aspect and a possible implementation of the second aspect, an example in which the cell reselection method is performed by a terminal device is used for description. In the method, the terminal device determines a cell frequency associated with a target network slice group, and then the terminal device performs cell reselection based on the cell frequency associated with the target network slice group.

Based on the foregoing technical solution, in a process in which the terminal device performs cell reselection, the terminal device performs cell reselection based on the cell frequency associated with the target network slice group. In a network slicing scenario, when the cell frequency used by the terminal device in the cell reselection process is configured based on a granularity of a network slice group, the solution in which the terminal device performs cell reselection based on the cell frequency associated with the target network slice group enables the terminal device to perform cell reselection by using a network slice group as a granularity for cell reselection. Therefore, the cell reselection solution is applicable to a scenario in which communication is performed based on a network slice group, and can improve a cell reselection success rate and communication efficiency.

Optionally, in a possible implementation of the second aspect, the target network slice group includes one network slice group.

Optionally, in a possible implementation of the second aspect, the target network slice group includes a plurality of network slice groups. A process in which the terminal device performs cell reselection based on the cell frequency associated with the target network slice group may include: The terminal device determines priority information of the target network slice group, where the priority information indicates a priority of the target network slice group; and the terminal device performs cell reselection based on a cell frequency that is associated with the target network slice group and determined based on the priority information.

In a possible implementation of the first aspect or the second aspect, the target network slice group includes a network slice that the terminal device expects to access.

Based on the foregoing technical solution, in a network slicing scenario, the target network slice group includes the network slice that the terminal device expects to access. In other words, the terminal device determines the target network slice group based on the network slice that the terminal device expects to access. Before the terminal device determines the priority information of the target network slice group, the terminal device may determine the target network slice group in advance based on one or more network slices that the terminal device expects to access. In other words, the target network slice group determined by the terminal device includes a group of network slices that the terminal device expects to access. Therefore, after the terminal device performs cell reselection to a target cell based on the priority of the target network slice group, the terminal device may perform communication in the target cell, to obtain a network service (associated with a service) corresponding to the network slice that the terminal device expects to access.

In a possible implementation of the first aspect or the second aspect, the network slice that the terminal device expects to access includes at least one of the following: a network slice indicated by an allowed (Allowed) single network slice selection assistance information (single network slice selection assistance information, NSSAI) information element, a network slice indicated by a requested NSSAI (Requested NSSAI) information element, a network slice indicated by a suspended NSSAI (suspended NSSAI) information element, or a network slice related to a mobile originated traffic (mobile originated traffic, MO traffic) service.

Based on the foregoing technical solution, the terminal device may determine, in different scenarios based on the network slice (denoted as a target network slice) indicated in the foregoing plurality of manners, the network slice that the terminal device expects to access. For example, for a terminal device in an idle (Idle) state, the terminal device may determine one or more network slices indicated by allowed NSSAI as network slices that the terminal device expects to access. For another example, for a terminal device in an inactive (Inactive) state, the terminal device may determine one or more network slices indicated by suspended NSSAI as network slices that the terminal device expects to access. Therefore, a plurality of implementations are provided to implement communication in different scenarios.

In a possible implementation of the first aspect or the second aspect, the target network slice group includes a default network slice (or referred to as a network slice corresponding to default NSSAI).

Alternatively, the target network slice group includes a default network slice group, and the default network slice group includes one or more default network slices.

In a possible implementation of the first aspect or the second aspect, the target network slice group is determined based on (at least) a correspondence between a network slice and a network slice group, and when the correspondence between a network slice and a network slice group (denoted as a first correspondence for ease of reference below) is invalid (or is not applicable, is not adapted, or the like) in a first area in which the terminal device is currently located, the target network slice group includes a default network slice. The first correspondence is a correspondence between a network slice and a network slice group, and the first area includes a registration area (registration area, RA), a tracking area (tracking area, TA), or a public land mobile network (public land mobile network, PLMN) area.

Optionally, the correspondence (or referred to as a mapping relationship, an association relationship, or the like) between a network slice and a network slice group specifically indicates a network slice group to which a network slice belongs, or indicates a network slice included in a network slice group.

Based on the foregoing technical solution, because different areas (RA, TA, or PLMN area) may correspond to different correspondences between a network slice group and a network slice, when the first correspondence is invalid in the first area in which the terminal device is currently located, the terminal device may determine that the target network slice group includes the default network slice. In other words, the terminal device determines a default network slice group including the default network slice as the target network slice group. In this way, the terminal device performs cell reselection based on a cell frequency associated with the default network slice group provided by the network device in the first area, to avoid a cell reselection failure.

Optionally, the default network slice group includes one or more default network slices.

Based on the foregoing technical solution, when the first correspondence is invalid in the first area in which the terminal device is located, the terminal device may determine that the target network slice group includes the default network slice group. A network slice included in the default network slice group may be specifically one or more default network slices (Default Slice) (defined by an operator).

Optionally, the first correspondence may be a correspondence that is between a network slice and a network slice group and that is indicated by the network device and last received by the terminal device.

Optionally, the first correspondence is associated with a second area, and the second area may include an RA, a TA, or a PLMN area. In other words, different areas (RA, TA, or PLMN) may be associated with different correspondences. In other words, in different areas (RA, TA, or PLMN), there may be different correspondences between a network slice and a network slice group. That the target network slice group is determined based on the first correspondence may include: The terminal device determines the target network slice group based on the first correspondence.

For example, the terminal device receives a system message, and the system message may include information indicating the first area in which the terminal device is currently located. When the first area indicated by the system message is the same as the second area associated with the first correspondence, the terminal device determines that the first correspondence is valid; or when the first area indicated by the system message is different from the second area associated with the first correspondence, the terminal device determines that the first correspondence is invalid.

Based on the foregoing technical solution, each network slice group in the target network slice group includes one or more target network slices that the terminal device expects to access. After the terminal device performs cell reselection to a target cell based on the priority of the target network slice group, the terminal device may perform communication in the target cell, to obtain a network service (associated with a service) corresponding to the network slice that the terminal device expects to access.

In addition, in the cell reselection manner in which the terminal device determines the target cell based on the priority information of the network slice group, the terminal device may directly determine, based on the target network slice group, the target cell including a plurality of target network slices, so that the terminal device can more quickly obtain more types of network services in the target cell that supports communication based on the plurality of target network slices, to improve user experience.

In a possible implementation of the first aspect or the second aspect, that the terminal device determines the priority information of the target network slice group includes: The terminal device receives the priority information from a network device. In other words, the terminal device determines the priority information based on an indication of the network device.

Optionally, the priority information is carried in first indication information, and the first indication information indicates at least the priority information.

Optionally, the first indication information further indicates a priority of a network slice group other than the target network slice group.

Based on the foregoing technical solution, the terminal device may determine the priority information of the target network slice group based on information sent by the network device. In this way, the terminal device can determine, based on an indication (for example, the first indication information) of the network device, a network slice group configured by the network device, thereby improving a success rate of subsequent cell reselection.

In a possible implementation of the first aspect or the second aspect, that the terminal device determines the priority information of the target network slice group includes: The terminal device determines the priority information based on information about a historically used (or historically accessed) network slice.

Optionally, the information about the historically used network slice includes a quantity of times of the historically used network slice, a frequency of the historically used network slice, and the like.

Based on the foregoing technical solution, the terminal device may determine the priority information of the target network slice group based on the information about the network slice historically used by the terminal device. The information about the historically used network slice may reflect specific information (for example, service preference information or duration) of the terminal device to some extent, so that the terminal device performs cell reselection based on the priority information determined based on the information about the historically accessed network slice. The determined target cell can provide a network service corresponding to the specific information of the terminal device, to improve user experience.

In a possible implementation of the first aspect or the second aspect, the priority information is determined based on a quantity and/or priority information of network slices included in each network slice group in the target network slice group.

Alternatively, that the terminal device determines the priority information of the target network slice group includes: The terminal device determines the priority information based on first information from the network device, where the first information indicates the quantity and/or priority information of network slices included in each network slice group in the target network slice group.

Optionally, the priority information includes a priority level, a priority value, or the like.

Based on the foregoing technical solution, the terminal device may determine the priority information of the target network slice group based on the quantity and/or priority information of network slices included in each network slice group in the target network slice group. In other words, the terminal device determines the priority information based on the information (for example, priority information or quantity information) about the network slice included in the target network slice group. The first information is determined based on an indication of the network device, so that the terminal device can determine, based on the indication (namely, the first information) of the network device, information about a network slice included in a network slice group configured by the network device, thereby improving a success rate of subsequent cell reselection.

Optionally, the first information includes at least one of the following:
priority information of a network slice included in each network slice group in the target network slice group;
a priority value of a network slice included in each network slice group in the target network slice group;
a quantity of network slices included in each network slice group in the target network slice group;
priority information of a target network slice included in each network slice group in the target network slice group;
a priority value of a target network slice included in each network slice group in the target network slice group; or
a quantity of target network slices included in each network slice group in the target network slice group.

Based on the foregoing technical solution, the first information may be specifically one piece or a combination of the foregoing information. In addition to improving implementation flexibility of the terminal device, a basis for determining the priority information may be provided from information in a plurality of dimensions (for example, a dimension of priority information and a dimension of quantity information).

In a possible implementation of the first aspect or the second aspect, that the terminal device performs cell reselection based on the cell frequency that is associated with the target network slice group and determined based on the priority information includes: The terminal device performs cell reselection based on a target cell frequency, where the target cell frequency is one or more cell frequencies that are indicated by the priority information and associated with a network slice group with a highest priority in the target network slice group.

Optionally, in the process in which the terminal device performs cell reselection based on the target cell frequency, if the terminal device cannot find a neighboring cell that meets a camping condition after performing frequency sweep based on the target cell frequency, the terminal device performs cell reselection based on one or more cell frequencies associated with a network slice group with a second highest priority (or another priority) in the target network slice group.

Based on the foregoing technical solution, in the process in which the terminal device performs cell reselection based on the cell frequency that is associated with the target network slice group and determined based on the priority information, the terminal device may specifically perform cell reselection at the one or more cell frequencies associated with the network slice group with the highest priority, to improve a success rate of performing cell reselection by the terminal device.

Optionally, that the terminal device performs cell reselection based on the target cell frequency includes: The terminal device performs cell reselection based on a frequency priority corresponding to the target cell frequency.

In a possible implementation of the first aspect or the second aspect, the method further includes: The terminal device receives indication information from the network device, where the indication information indicates to perform cell reselection based on a frequency priority corresponding to a first cell frequency after cell reselection performed based on the target cell frequency fails, and the first cell frequency includes at least one of the following:
a cell frequency associated with one or more network slices included in a network slice set, where the network slice set includes the network slice that the terminal device expects to access;
a cell frequency that is not associated with a network slice;
a cell frequency associated with one or more network slice groups included in a network slice group set, where the network slice group set includes a network slice group corresponding to the network slice that the terminal device expects to access;
a cell frequency that is not associated with a network slice group; or
one or more cell frequencies that are indicated by the priority information and associated with a network slice group other than the network slice group with the highest priority in the target network slice group.

Based on the foregoing technical solution, the terminal device may further receive the indication information, so that in the process of performing cell reselection based on the target cell frequency, the terminal device may determine, based on the indication information, that after cell reselection performed based on the target cell frequency fails, the terminal device may perform cell reselection based on the frequency priority corresponding to the first cell frequency. In this way, when cell reselection performed based on the target cell frequency fails, the terminal device may further perform cell reselection based on the indication information, to further improve a success rate of performing cell reselection by the terminal device.

In this application, the cell frequency that is not associated with a network slice may also be expressed as a cell frequency that is not determined based on a network slice or a cell frequency that does not need to be determined based on a network slice. Similarly, the cell frequency that is not associated with a network slice group may also be expressed as a cell frequency that is not determined based on a network slice group or a cell frequency that does not need to be determined based on a network slice group.

In this application, the network slice set may include one or more network slices, and each network slice may be associated with one or more cell frequencies. In addition, when the network slice set includes a plurality of network slices, the terminal device may determine a plurality of cell frequencies based on the plurality of network slices, to improve a success rate of cell reselection performed by the terminal device based on the cell frequency associated with the network slice set. Similarly, the network slice group set may include one or more network slice groups, and each network slice group may be associated with one or more cell frequencies. In addition, when the network slice group set includes a plurality of network slice groups, the terminal device may determine a plurality of cell frequency groups based on the plurality of network slice groups, to improve a success rate of cell reselection performed by the terminal device based on the cell frequency associated with the network slice group set.

Optionally, in addition to the network slice that the terminal device expects to access, the network slice set may further include another network slice. This is not limited herein. Similarly, in addition to the network slice group corresponding to the network slice that the terminal device expects to access, the network slice group set may further include another network slice group. This is not limited herein.

In addition, an identifier (for example, a network slice index or a network slice name) of the network slice included in the network slice set may be implemented in a form of a list, where the list may be referred to as a slice list (Slice List); or may be implemented in another form, for example, a mathematical relational expression, a bitmap, or another form. This is not limited herein. Similarly, an identifier (for example, a network slice group index or a network slice group name) of the network slice group included in the network slice group set may be implemented in a form of a list, where the list may be referred to as a slice group list (Slice Group List); or may be implemented in another form, for example, a mathematical relational expression, a bitmap, or another form. This is not limited herein.

Optionally, when the first cell frequency does not include the one or more cell frequencies (denoted as second cell frequencies for ease of description) that are indicated by the priority information and associated with the network slice group other than the network slice group with the highest priority in the target network slice group, that the terminal device performs cell reselection based on the target cell frequency includes:
the terminal device performs cell reselection based on the second cell frequency after the terminal device determines that cell reselection performed based on the target cell frequency fails; and
the terminal device performs cell reselection based on the first cell frequency after the terminal device determines that cell reselection performed based on the second cell frequency fails.

In a possible implementation of the first aspect or the second aspect, the indication information includes at least one of the following: a quantity of times of performing cell reselection based on the first cell frequency, duration of performing cell reselection based on the first cell frequency, a start moment of performing cell reselection based on the first cell frequency, or an end moment of performing cell reselection based on the first cell frequency.

Based on the foregoing technical solution, the indication information received by the terminal device may include the foregoing "at least one" cell reselection implementation, so that when the terminal device fails to perform cell reselection based on the target cell frequency, the terminal device may further determine, based on the indication information, an implementation of performing cell reselection based on the first cell frequency, to further improve a success rate of performing cell reselection by the terminal device.

A third aspect of this application provides a cell reselection method. The method is performed by a network device, or the method is performed by some components (for example, a processor, a chip, or a chip system) in a network device, or the method may be implemented by a logical module or software that can implement all or some functions of a network device. In the first aspect and a possible implementation of the first aspect, an example in which the cell reselection method is performed by a network device is used for description. In the method, the network device determines first indication information, where the first indication information indicates priority information of a target network slice group, and the priority information indicates a priority of the target network slice group; and the network device sends the first indication information to a terminal device.

Based on the foregoing technical solution, the first indication information sent by the network device indicates the priority of the target network slice group, so that the terminal device performs cell reselection based on a cell frequency that is associated with the target network slice group and determined based on the first indication information. In a network slicing scenario, when the cell frequency used by the terminal device in the cell reselection process is configured based on a granularity of a network slice group, the solution in which the terminal device performs cell reselection based on the cell frequency that is associated with the target network slice group and determined based on the first indication information enables the terminal device to perform cell reselection by using a network slice group as a granularity for cell reselection. Therefore, the cell reselection solution is applicable to a scenario in which communication is performed based on a network slice group, and can improve a cell reselection success rate and communication efficiency.

In addition, in an implementation in which the terminal device may determine the priority information of the target network slice group based on the first indication information sent by the network device, the terminal device can also determine, based on an indication (that is, the first indication information) of the network device, a network slice group configured by the network device, thereby improving a success rate of subsequent cell reselection.

Optionally, the first indication information further indicates a priority of a network slice group other than the target network slice group.

In a possible implementation of the third aspect, the method further includes: The network device sends indication information to the terminal device, where the indication information indicates to perform cell reselection based on a frequency priority corresponding to a first cell frequency after cell reselection performed based on the target cell frequency fails, and the first cell frequency includes at least one of the following:
a cell frequency associated with one or more network slices included in a network slice set, where the network slice set includes the network slice that the terminal device expects to access;
a cell frequency that is not associated with a network slice;
a cell frequency associated with one or more network slice groups included in a network slice group set, where the network slice group set includes a network slice group corresponding to the network slice that the terminal device expects to access;
a cell frequency that is not associated with a network slice group; or
one or more cell frequencies that are indicated by the priority information and associated with a network slice group other than the network slice group with the highest priority in the target network slice group.

Optionally, in addition to the network slice that the terminal device expects to access, the network slice set may further include another network slice. This is not limited herein. Similarly, in addition to the network slice group corresponding to the network slice that the terminal device expects to access, the network slice group set may further include another network slice group. This is not limited herein.

In addition, an identifier (for example, a network slice index or a network slice name) of the network slice included in the network slice set may be implemented in a form of a list, where the list may be referred to as a slice list (Slice List); or may be implemented in another form, for example, a mathematical relational expression, a bitmap, or another form. This is not limited herein. Similarly, an identifier (for example, a network slice group index or a network slice group name) of the network slice group included in the network slice group set may be implemented in a form of a list, where the list may be referred to as a slice group list (Slice Group List); or may be implemented in another form, for example, a mathematical relational expression, a bitmap, or another form. This is not limited herein.

Based on the foregoing technical solution, the network device may further send the indication information to the terminal device, so that in the process of performing cell reselection based on the target cell frequency, the terminal device may determine, based on the indication information, that after cell reselection performed based on the target cell frequency fails, the terminal device may perform cell reselection based on the frequency priority corresponding to the first cell frequency. In this way, when cell reselection performed based on the target cell frequency fails, the terminal device may further perform cell reselection based on the indication information, to further improve a success rate of performing cell reselection by the terminal device.

In a possible implementation of the third aspect, the indication information includes at least one of the following: a quantity of times of performing cell reselection based on the first cell frequency, duration of performing cell reselection based on the first cell frequency, a start moment of performing cell reselection based on the first cell frequency, or an end moment of performing cell reselection based on the first cell frequency.

Based on the foregoing technical solution, the indication information sent by the network device may include the foregoing "at least one" cell reselection implementation, so that when the terminal device fails to perform cell reselection based on the target cell frequency, the terminal device may further determine, based on the indication information, an implementation of performing cell reselection based on the first cell frequency, to further improve a success rate of performing cell reselection by the terminal device.

A fourth aspect of this application provides a communication apparatus. The apparatus may implement the method in any one of the first aspect or the possible implementations of the first aspect. The apparatus includes a corresponding unit or module configured to perform the method. The unit or module included in the apparatus can be implemented by software and/or hardware. For example, the apparatus may be a terminal device, or the apparatus may be a component (for example, a processor, a chip, or a chip system) in a terminal device, or the apparatus may be a logical module or software that can implement all or some functions of a terminal device.

The communication apparatus includes at least a processing unit.

The processing unit is configured to determine priority information of a target network slice group, where the priority information indicates a priority of the target network slice group.

The processing unit is configured to perform cell reselection based on a cell frequency that is associated with the target network slice group and determined based on the priority information.

A fifth aspect of this application provides a communication apparatus. The apparatus may implement the method in any one of the second aspect or the possible implementations of the second aspect. The apparatus includes a corresponding unit or module configured to perform the method. The unit or module included in the apparatus can be implemented by software and/or hardware. For example, the apparatus may be a terminal device, or the apparatus may be a component (for example, a processor, a chip, or a chip system) in a terminal device, or the apparatus may be a logical module or software that can implement all or some functions of a terminal device.

The communication apparatus includes at least a processing unit.

The processing unit is configured to determine a cell frequency associated with a target network slice group.

The processing unit is configured to perform cell reselection based on the cell frequency associated with the target network slice group.

Optionally, in a possible implementation of the fifth aspect, the target network slice group includes one network slice group.

Optionally, in a possible implementation of the fifth aspect, the target network slice group includes a plurality of network slice groups. A process in which the terminal device performs cell reselection based on the cell frequency associated with the target network slice group may include: The terminal device determines priority information of the target network slice group, where the priority information indicates a priority of the target network slice group; and the terminal device performs cell reselection based on a cell frequency that is associated with the target network slice group and determined based on the priority information.

In a possible implementation of the fourth aspect or the fifth aspect, the target network slice group includes a network slice that the terminal device expects to access.

In a possible implementation of the fourth aspect or the fifth aspect, the network slice that the terminal device expects to access includes at least one of the following: a network slice indicated by an allowed NSSAI information element, a network slice indicated by a requested NSSAI information element, a network slice indicated by a suspended NSSAI information element, or a network slice related to a mobile originated traffic service.

In a possible implementation of the fourth aspect or the fifth aspect, the target network slice group includes a default network slice.

In a possible implementation of the fourth aspect or the fifth aspect, the target network slice group is determined based on a correspondence between a network slice and a network slice group, and when the correspondence between a network slice and a network slice group is invalid in a first area in which the terminal device is currently located, the target network slice group includes a default network slice. The first area includes a registration area (registration area, RA), a tracking area (tracking area, TA), or a public land mobile network (public land mobile network, PLMN) area.

In a possible implementation of the fourth aspect or the fifth aspect, the apparatus further includes a transceiver unit, and that the processing unit is configured to determine priority information of a target network slice group includes:
the processing unit is configured to receive the priority information from a network device through the transceiver unit.

In a possible implementation of the fourth aspect or the fifth aspect, that the processing unit is configured to determine priority information of a target network slice group includes:
the processing unit is configured to determine the priority information based on information about a historically used network slice.

In a possible implementation of the fourth aspect or the fifth aspect, the priority information is determined based on a quantity and/or priority information of network slices included in each network slice group in the target network slice group.

In a possible implementation of the fourth aspect or the fifth aspect, that the processing unit is configured to perform cell reselection based on a cell frequency that is associated with the target network slice group and determined based on the priority information includes:
the processing unit is configured to perform cell reselection based on a target cell frequency, where the target cell frequency is one or more cell frequencies associated with a network slice group with a highest priority in the target network slice group.

In a possible implementation of the fourth aspect or the fifth aspect, the transceiver unit is further configured to receive indication information, where the indication information indicates to perform cell reselection based on a frequency priority corresponding to a first cell frequency after cell reselection performed based on the target cell frequency fails, and the first cell frequency includes at least one of the following:
a cell frequency associated with one or more network slices included in a network slice set, where the network slice set includes the network slice that the terminal device expects to access;
a cell frequency that is not associated with a network slice;
a cell frequency associated with one or more network slice groups included in a network slice group set, where the network slice group set includes a network slice group corresponding to the network slice that the terminal device expects to access;
a cell frequency that is not associated with a network slice group; or
one or more cell frequencies that are indicated by the priority information and associated with a network slice group other than the network slice group with the highest priority in the target network slice group.

In a possible implementation of the fourth aspect or the fifth aspect, the indication information includes at least one of the following: a quantity of times of performing cell reselection based on the first cell frequency, duration of performing cell reselection based on the first cell frequency, a start moment of performing cell reselection based on the first cell frequency, or an end moment of performing cell reselection based on the first cell frequency.

A sixth aspect of this application provides a communication apparatus. The apparatus may implement the method in any one of the third aspect or the possible implementations of the third aspect. The apparatus includes a corresponding unit or module configured to perform the method. The unit or module included in the apparatus can be implemented by software and/or hardware. For example, the apparatus may be a network device, or the apparatus may be a component (for example, a processor, a chip, or a chip system) in a network device, or the apparatus may be a logical module or software that can implement all or some functions of a network device.

The communication apparatus includes a processing unit and a transceiver unit.

The processing unit is configured to determine priority information of a target network slice group, where the priority information indicates a priority of the target network slice group.

The transceiver unit is configured to send the priority information.

In a possible implementation of the sixth aspect, the transceiver unit is further configured to send indication information, where the indication information indicates to perform cell reselection based on a frequency priority corresponding to a first cell frequency after cell reselection performed based on the target cell frequency fails, and the first cell frequency includes at least one of the following:
a cell frequency associated with one or more network slices included in a network slice set, where the network slice set includes the network slice that the terminal device expects to access;
a cell frequency that is not associated with a network slice;
a cell frequency associated with one or more network slice groups included in a network slice group set, where the network slice group set includes a network slice group corresponding to the network slice that the terminal device expects to access;
a cell frequency that is not associated with a network slice group; or
one or more cell frequencies that are indicated by the priority information and associated with a network slice group other than the network slice group with the highest priority in the target network slice group.

In a possible implementation of the sixth aspect, the indication information includes at least one of the following: a quantity of times of performing cell reselection based on the first cell frequency, duration of performing cell reselection based on the first cell frequency, a start moment of performing cell reselection based on the first cell frequency, or an end moment of performing cell reselection based on the first cell frequency.

A seventh aspect of embodiments of this application provides a communication apparatus, including at least one processor. The at least one processor is coupled to a memory, and the memory is configured to store a program or instructions. The at least one processor is configured to execute the program or the instructions, so that the apparatus implements the method according to any one of the first aspect or the possible implementations of the first aspect, or the apparatus implements the method according to any one of the second aspect or the possible implementations of the second aspect, or the apparatus implements the method according to any one of the third aspect or the possible implementations of the third aspect.

An eighth aspect of embodiments of this application provides a computer-readable storage medium storing one or more computer-executable instructions. When the computer-executable instructions are executed by a processor, the processor performs the method according to any one of the first aspect or the possible implementations of the first aspect, or the processor performs the method according to any one of the second aspect or the possible implementations of the second aspect, or the processor performs the method according to any one of the third aspect or the possible implementations of the third aspect.

A ninth aspect of embodiments of this application provides a computer program product (or referred to as a computer program) storing one or more computers. When the computer program product is executed by a processor, the processor performs the method according to any one of the first aspect or the possible implementations of the first aspect, or the processor performs the method according to any one of the second aspect or the possible implementations of the second aspect, or the processor performs the method according to any one of the third aspect or the possible implementations of the third aspect.

A tenth aspect of embodiments of this application provides a chip system. The chip system includes at least one processor, configured to support a communication apparatus in implementing the function in any one of the first aspect or the possible implementations of the first aspect; or configured to support a communication apparatus in implementing the function in any one of the second aspect or the possible implementations of the second aspect; or configured to support a communication apparatus in implementing the function in any one of the third aspect or the possible implementations of the third aspect.

In a possible design, the chip system may further include a memory, configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

An eleventh aspect of embodiments of this application provides a communication system. The communication system includes the communication apparatus in the fourth aspect and the communication apparatus in the sixth aspect, and/or the communication system includes the communication apparatus in the fifth aspect and the communication apparatus in the sixth aspect, and/or the communication system includes the communication apparatus in the seventh aspect.

For technical effects brought by any design manner in the third aspect to the ninth aspect, refer to technical effects brought by different implementations of the first aspect or the second aspect. Details are not described herein again.

It can be learned from the foregoing technical solutions that after the terminal device determines the priority information indicating the target network slice group, in a process of performing cell reselection by the terminal device, the terminal device performs cell reselection based on the cell frequency that is associated with the target network slice group and determined based on the priority information. In other words, the terminal device performs cell reselection based on a cell frequency that is associated with the target network slice group and determined based on the priority of the target network slice group. In a network slicing scenario, when the cell frequency used by the terminal device in the cell reselection process is configured based on a granularity of a network slice group, the solution in which the terminal device performs cell reselection based on the cell frequency that is associated with the target network slice group and determined based on the priority information enables the terminal device to perform cell reselection by using a network slice group as a granularity for cell reselection. Therefore, the cell reselection solution is applicable to a scenario in which communication is performed based on a network slice group, and can improve a cell reselection success rate and communication efficiency.

### BRIEF DESCRIPTION OF DRAWINGS

FIG. 1 is a schematic diagram of a communication system according to this application;
FIG. 2 is a schematic diagram of a cell reselection method according to this application;
FIG. 3a is a schematic diagram of a communication scenario according to this application;
FIG. 3b is another schematic diagram of a communication scenario according to this application;
FIG. 4 is another schematic diagram of a cell reselection method according to this application;
FIG. 5 is another schematic diagram of a cell reselection method according to this application;
FIG. 6 is another schematic diagram of a cell reselection method according to this application;
FIG. 7 is another schematic diagram of a cell reselection method according to this application;
FIG. 8 is another schematic diagram of a communication scenario according to this application;
FIG. 9 is another schematic diagram of a cell reselection method according to this application;
FIG. 10a is another schematic diagram of a cell reselection method according to this application;
FIG. 10b is another schematic diagram of a cell reselection method according to this application;
FIG. 11 is another schematic diagram of a cell reselection method according to this application;
FIG. 12a is another schematic diagram of a cell reselection method according to this application;
FIG. 12b is another schematic diagram of a cell reselection method according to this application;
FIG. 13a is another schematic diagram of a cell reselection method according to this application;
FIG. 13b is another schematic diagram of a cell reselection method according to this application;
FIG. 14 is another schematic diagram of a communication scenario according to this application;
FIG. 15a is another schematic diagram of a cell reselection method according to this application;
FIG. 15b is another schematic diagram of a cell reselection method according to this application;
FIG. 16 is a schematic diagram of a communication apparatus according to this application;
FIG. 17 is another schematic diagram of a communication apparatus according to this application; and
FIG. 18 is another schematic diagram of a communication apparatus according to this application.

### DESCRIPTION OF EMBODIMENTS

The following describes the technical solutions in embodiments of this application with reference to the accompanying drawings in embodiments of this application. It is clear that the described embodiments are merely some rather than all of embodiments of this application. Based on embodiments of this application, all other embodiments obtained by a person of ordinary skill in the art without creative efforts fall within the protection scope of this application.

First, some terms in embodiments of this application are explained and described, to facilitate understanding of a person skilled in the art.
(1) Terminal device: may be a wireless terminal device that can receive scheduling and indication information of a network device. The wireless terminal device may be a device that provides voice and/or data connectivity for a user, a handheld device with a wireless connection function, or another processing device connected to a wireless modem.
   The terminal device may communicate with one or more core networks or the Internet through a radio access network (radio access network, RAN). The terminal device may be a mobile terminal device such as a mobile telephone (or referred to as a "cellular" phone or a mobile phone (mobile phone)), a computer, and a data card. For example, the terminal device may be a portable, pocket-sized, handheld, computer built-in, or vehicle-mounted mobile apparatus that exchanges a voice and/or data with the radio access network. For example, the terminal device may be a device such as a personal communication service (personal communication service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having wireless sending and receiving functions. The wireless terminal device may also be referred to as a system, a subscriber unit (subscriber unit), a subscriber station (subscriber station), a mobile station (mobile station), a mobile station (mobile station, MS), a remote station (remote station), an access point (access point, AP), a remote terminal device (remote terminal), an access terminal device (access terminal), a user terminal device (user terminal), a user agent (user agent), a subscriber station (subscriber station, SS), customer premises equipment (customer premises equipment, CPE), a terminal (terminal), user equipment (user equipment, UE), a mobile terminal (mobile terminal, MT), or the like. Alternatively, the terminal device may be a wearable device, a terminal device in a next-generation communication system, for example, a 5G communication system, a terminal device in a future evolved public land mobile network (public land mobile network, PLMN), or the like.
(2) Network device: may be a device in a wireless network. For example, the network device may be a radio access network (radio access network, RAN) node (or device) through which a terminal device accesses the wireless network, and may also be referred to as a base station. Currently, some examples of the RAN device are: a next-generation NodeB (generation NodeB, gNodeB) in a 5G communication system, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), or the like. In addition, in a network structure, a network device may include a central unit (centralized unit, CU) node, a distributed unit (distributed unit, DU) node, or a RAN device including a CU node and a DU node.

The network device can send configuration information (for example, carried in a scheduling message and/or an indication message) to the terminal device. The terminal device further performs network configuration based on the configuration information, so that network configurations of the network device and the terminal device are aligned. Alternatively, through a network configuration preset in the network device and a network configuration preset in the terminal device, network configurations of the network device and the terminal device are aligned. Specifically, "align" means that when there is an interaction message between the network device and the terminal device, the network device and the terminal device have a consistent understanding for a carrier frequency for sending and receiving the interaction message, determining of a type of the interaction message, a meaning of field information carried in the interaction message, or another configuration of the interaction message.

In addition, in another possible case, the network device may be another apparatus providing a wireless communication function for the terminal device. A specific technology and a specific device form that are used by the network device are not limited in embodiments of this application. For ease of description, this is not limited in embodiments of this application.

The network device may further include a core network device. For example, the core network device includes a network element such as a mobility management entity (mobility management entity, MME), a home subscriber server (home subscriber server, HSS), a serving gateway (serving gateway, S-GW), a policy and charging rules function (policy and charging rules function, PCRF), or a public data network gateway (public data network gateway, PDN gateway, P-GW) in a 4G network; or an access and mobility management function (access and mobility management function, AMF), a user plane function (user plane function, UPF), or a session management function (session management function, SMF) in a 5G network. In addition, the core network device may further include another core network device in a 5G network and a next-generation network of the 5G network.

In embodiments of this application, an apparatus configured to implement a function of a network device may be a network device, or may be an apparatus that can support the network device in implementing the function, for example, a chip system. The apparatus may be installed in the network device. In the technical solutions provided in embodiments of this application, the technical solutions provided in embodiments of this application are described by using an example in which the apparatus configured to implement a function of a network device is a network device.

(3) Configuration and preconfiguration: In this application, both the configuration and the preconfiguration are used. The configuration means that a base station/server sends configuration information of some parameters or values of parameters to a terminal by using a message or signaling, so that the terminal determines a parameter for communication or a resource for transmission based on the values or the information. Similar to the configuration, the preconfiguration may be parameter information or a parameter value negotiated by a base station/server with a terminal device in advance, or may be parameter information or a parameter value that is to be used by a base station/server or a terminal device and that is specified in a standard protocol, or may be parameter information or a parameter value pre-stored in a base station/server or a terminal device. This is not limited in this application.

Further, the values and parameters may be changed or updated.

(4) Terms "system" and "network" in embodiments of this application may be used interchangeably. "Target" means one or more, and "a plurality of" means two or more. The term "and/or" describes an association relationship of associated objects, and indicates that three relationships may exist. For example, A and/or B may indicate the following three cases: Only A exists, both A and B exist, and only B exists. A and B may be singular or plural. The character "/" usually indicates an "or" relationship between the associated objects. "At least one of the following items (pieces)" or a similar expression thereof refers to any combination of these items, including a single item (piece) or any combination of a plurality of items (pieces). For example, "target in A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

In this application, unless otherwise specified, for same or similar parts of the embodiments, refer to each other. In embodiments of this application and the implementations/implementation methods in the embodiments, unless otherwise specified or unless a logical conflict occurs, terms and/or descriptions are consistent and may be mutually referenced between different embodiments and between the implementations/implementation methods in the embodiments. Technical features in the different embodiments and the implementations/implementation methods in the embodiments may be combined to form a new embodiment, implementation, or implementation method based on an internal logical relationship thereof. The following implementations of this application are not intended to limit the protection scope of this application.

This application may be applied to a long term evolution (long term evolution, LTE) system, a new radio (new radio, NR) system, or another communication system. The communication system includes a network device and a terminal device. The network device is used as a configuration information sending entity, and the terminal device is used as a configuration information receiving entity. Specifically, an entity in the communication system sends configuration information to another entity, and sends data to the another entity, or receives data sent by the another entity. The another entity receives the configuration information, and sends data to the configuration information sending entity based on the configuration information, or receives data sent by the configuration information sending entity.

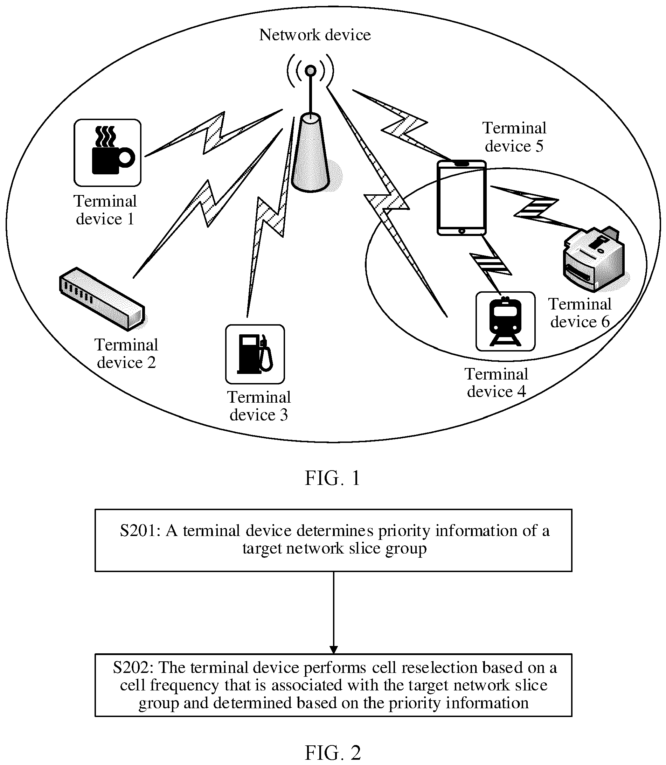

FIG. 1 is a schematic diagram of a communication system according to this application. FIG. 1 shows one network device and six terminal devices as an example. The six terminal devices are respectively a terminal device 1, a terminal device 2, a terminal device 3, a terminal device 4, a terminal device 5, and a terminal device 6. In the example shown in FIG. 1, an example in which the terminal device 1 is a smart teacup, the terminal device 2 is a smart air conditioner, the terminal device 3 is a smart fuel dispenser, the terminal device 4 is a vehicle, the terminal device 5 is a mobile phone, and the terminal device 6 is a printer is used for description.

As shown in FIG. 1, a configuration information sending entity may be the network device. An example in which the network device is a base station (Base Station) and each terminal device is UE is used for description. Configuration information receiving entities may be UE 1 to UE 6. In this case, the base station and the UE 1 to the UE 6 form a communication system. In the communication system, the UE 1 to the UE 6 may send uplink data to the network device, and the network device needs to receive the uplink data sent by the UE 1 to the UE 6. In addition, the network device may send configuration information to the UE 1 to the UE 6.

In addition, in FIG. 1, the UE 4 to the UE 6 may alternatively form a communication system. In this case, a configuration information sending entity and a configuration information receiving entity each may be UE. The UE 5 serves as a network device, that is, the configuration information sending entity. The UE 4 and the UE 6 serve as terminal devices, that is, configuration information receiving entities. For example, in an internet of vehicles system, the UE 5 separately sends configuration information to the UE 4 and the UE 6, and receives uplink data sent by the UE 4 and the UE 6. Correspondingly, the UE 4 and the UE 6 receive the configuration information sent by the UE 5, and send the uplink data to the UE 5.

The foregoing content briefly describes the system architecture in embodiments of this application. To better understand the technical solutions in embodiments of this application, the following describes content related to embodiments of this application.

### 1. Network slicing

With development of mobile communication technologies, various new services and application scenarios continuously emerge, and requirements of these services on network functions, connection performance, security, and the like are greatly different. If a single network is used to carry the services, it is difficult to simultaneously meet requirements on high bandwidth, low latency, high reliability, and the like. Based on this, in a 5G network, a customized network service is provided for a user through network slicing (Network Slicing), and networking is performed on demand by flexibly allocating network resources.

In an implementation, a plurality of logical subnets that have different features and are isolated from each other may be virtualized on a same physical infrastructure (physical infrastructure), to provide a service for a user in a targeted manner. For example, services provided by different logical subnets may include enhanced mobile broadband (enhanced mobile broadband, eMBB), ultra-reliable and low-latency communication (ultra-reliable and low-latency communication, URLLC), massive machine-type communication (massive machine-type communications, mMTC), and the like.

Different logical subnets are identified and differentiated by using "single network slice selection assistance information (single network slice selection assistance information, S-NSSAI)". For ease of description, one or more pieces of S-NSSAI are denoted as NSSAI below. Each piece of S-NSSAI may include the following content:
1. A slice/service type (slice/service type, SST) refers to a slice specific feature and service type.
2. A slice differentiator (slice differentiator, SD) is used as a supplement to the slice/service type, can further differentiate a plurality of network slice instances that meet a same slice/service type, and is an option.

In addition, NSSAI is specifically classified into the following types:
1. Subscribed NSSAI (Subscribed NSSAI): is subscription data of a subscriber.
2. Default NSSAI (Default NSSAI): According to a policy of an operator, one or more pieces of subscribed NSSAI of a subscriber may be set as default NSSAI. If UE does not include allowed NSSAI (Allowed NSSAI) in a registration request message (Registration Request), a network device provides a service for the UE by using the default NSSAI (if the default NSSAI exists).
3. Requested NSSAI (Requested NSSAI): indicates configured NSSAI (Configured NSSAI) or allowed NSSAI included in a registration request message (Registration Request) by UE.
4. Allowed NSSAI (Allowed NSSAI): indicates which NSSAI in requested NSSAI of UE is allowed by a network device. The network device sends the allowed NSSAI to the UE by using an "Allowed NSSAI" information element (information element, IE) in a registration accept message (Registration Accept).
5. Rejected NSSAI (Rejected NSSAI): indicates which NSSAI in requested NSSAI of UE is rejected by a network device. The network device sends the rejected NSSAI to the UE by using a "Rejected NSSAI" IE in a registration accept message (Registration Accept).
6. Configured NSSAI (Configured NSSAI): indicates NSSAI configured by a network device for UE for use. After receiving this configuration parameter, the UE learns which NSSAI is available with respect to the network device. The network device sends the configured NSSAI to the UE by using a "Configured NSSAI" IE in a registration accept message (Registration Accept). If a configuration of the UE changes after registration, the network device may notify the UE of an update by using a configuration update command (Configuration update command). The UE stores, in non-volatile storage space, configured NSSAI configured by each network device for the UE. Usually, a maximum of only one piece of configured NSSAI can be configured in each PLMN.

### 2. Cell reselection

Cell reselection refers to a process in which UE in an idle or inactive state monitors signal quality of a neighboring cell and a current cell to select an optimal cell to provide a service signal. Cell reselection basically includes the following three processes:
1. Measure a current serving cell and a neighboring cell (including an intra-frequency, inter-frequency, or inter-RAT cell) according to a measurement start criterion. Usually, the inter-RAT cell is a cell that supports a different radio access technology (radio access technology, RAT).
2. Determine whether a signal of the neighboring cell meets a reselection criterion.
3. If the reselection criterion is met, start reselection, and receive a system information block 1 (system information block 1, SIB1) of a new cell, and if there is no access restriction (for example, an operator may have some reserved cells or cells that have access restrictions), camp on the new cell. If the reselection criterion is not met, still stay in the current serving cell.

Optionally, two parameters: a cell reselection priority and signal quality of a current camping cell, need to be considered during neighboring cell measurement. A process of neighboring cell measurement may be briefly described as follows: If a priority of a neighboring cell is higher than that of a current cell, UE needs to unconditionally start measurement regardless of quality of the current cell of the UE. If a priority of a neighboring cell is lower than or equal to that of a current cell, UE measures signal quality of the current camping cell and compares the signal quality with a quality criterion delivered by a network device; and if the signal quality is high than the criterion, the UE does not measure the neighboring cell; or if the signal quality is lower than the criterion, the UE measures the neighboring cell. After cell reselection measurement, cell quality starts to be determined and cell reselection is performed. Related bases include signal quality of a serving cell, signal quality of a neighboring cell, and a reselection threshold and a cell access parameter (whether a cell is barred (barred), whether a cell is reserved (reserved), an access level, and the like) delivered by a network device.

It can be learned from the foregoing cell reselection process that a network slice is not considered in a current cell reselection solution. However, in a scenario in which communication is performed based on a network slice, a cell frequency used by a terminal device in a cell reselection process may be configured based on a granularity of a network slice (or a network slice group). In this case, how the terminal device performs cell reselection is an urgent technical problem to be resolved.

To resolve the foregoing problem, this application provides a cell reselection method and a communication apparatus. In this way, in a network slicing scenario, when a cell frequency used by a terminal device in a cell reselection process is configured based on a granularity of a network slice group, a solution in which the terminal device performs cell reselection based on a cell frequency that is associated with a target network slice group and determined based on priority information enables the terminal device to perform cell reselection by using a network slice group as a granularity for cell reselection. Therefore, the cell reselection solution is applicable to a scenario in which communication is performed based on a network slice group, and can improve a cell reselection success rate and communication efficiency.

FIG. 2 is a schematic diagram of a cell reselection method according to this application. The method includes the following steps.

S201: A terminal device determines priority information of a target network slice group.

In this embodiment, the terminal device determines the priority information of the target network slice group in step S201, where the priority information indicates a priority of the target network slice group. Each network slice group in the target network slice group includes one or more network slices.

S202: The terminal device performs cell reselection based on a cell frequency that is associated with the target network slice group and determined based on the priority information.

It should be noted that a process in which the terminal device performs cell reselection based on the cell frequency that is associated with the target network slice group and determined based on the priority information may include: When the terminal device is in an idle (IDLE) state or an inactive (INACTIVE) state, the terminal device performs cell reselection based on the cell frequency that is associated with the target network slice group and determined based on the priority information.

In a possible implementation, in a network slicing scenario, the terminal device may perform cell reselection based on a granularity of a network slice. In other words, if a cell frequency used by the terminal device in a cell reselection process is configured based on a granularity of a network slice, after determining a specific network slice (including one or more network slices), the terminal device performs cell reselection based on a cell frequency associated with the specific network slice.

For example, that the terminal device performs cell reselection based on a granularity of a network slice may include the following process.

ARAN may broadcast a cell reselection priority for a slice. In different scenarios, one or more network slices that the terminal device expects to access may be referred to as target network slices (Intended Slice) (or another name, which is not limited herein). The target network slice is network slice-related information received by an access stratum (access stratum, AS) of the terminal device from a non-access stratum (non-access stratum, NAS) in different cases. An example is as follows.
1. Cell selection/reselection: The target network slice may be allowed NSSAI/requested NSSAI.

Optionally, for an initial registration process, the terminal device may apply for new NSSAI, that is, the target network slice may be (a network slice indicated by) requested NSSAI.

Optionally, for the terminal device in the idle state, the target network slice may be (a network slice indicated by) allowed NSSAI.

Optionally, for the terminal device in the inactive state, the target network slice may be (a network slice indicated by) suspended NSSAI, that is, (a network slice indicated by) related NSSAI of an activated protocol data unit (protocol data unit, PDU) session in which context of the terminal device is suspended in the inactive state.

2. Mobile originated traffic (mobile originated traffic, MO traffic): The target network slice is (a network slice indicated by) NSSAI related to a mobile originated (mobile originated, MO) service.

In another possible implementation, in a network slicing scenario, the terminal device may perform cell reselection based on a granularity of a network slice group. In other words, if a cell frequency used by the terminal device in a cell reselection process is configured based on a granularity of a network slice group, after determining a specific network slice group (including one or more network slice groups), the terminal device performs cell reselection based on a cell frequency associated with the specific network slice group.

Compared with the foregoing process of performing cell reselection based on a granularity of a network slice, a concept of the network slice group (Slice Group) is further proposed, that is, one or more network slices are grouped and identified according to a specific rule.

In a scenario in which communication is performed based on a network slice group, a network device uses cell reselection information (for example, cell frequency information) associated with the network slice group as one piece of information to be sent to the terminal device, and uses slice information of a network slice included in the network slice group as another piece of information to be sent to the terminal device. In the separate sending manner, information transmission security is improved, and broadcast overheads are reduced.

For example, the grouping rule may include the following implementations.

Solution 1: Grouping is performed based on an SST.

Solution 2: Grouping is performed based on a unified access control (unified access control, UAC) access category (access category, AC).

Solution 3: Grouping is performed based on another network slice grouping mechanism different from Solution 1 and Solution 2.

Specifically, there is a correspondence between NSSAI and a specific network slice group identifier (Slice Group ID) in a specific area. In other words, a same network slice group identifier in the specific area includes same NSSAI. The correspondence has the following features.

Feature 1: bidirectional correspondence. For example, there may be related NSSAI corresponding to a network slice group identifier, and there may be a network slice group identifier corresponding to NSSAI.

Feature 2: The correspondence is provided by a core network (core network, CN) element for the terminal device by using a NAS, and may be implemented based on a specific terminal device (for example, an SST carried in allowed NSSAI/configured NSSAI/subscribed NSSAI) or a non-specific terminal device (for example, based on actual network deployment).

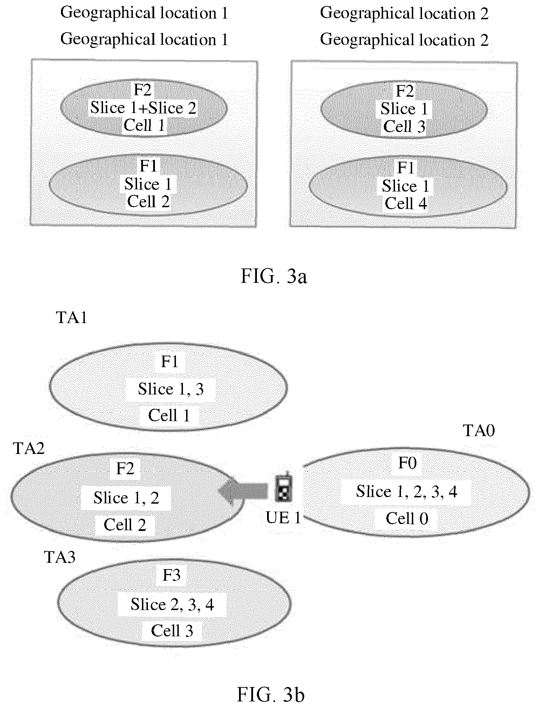

An implementation example is shown in FIG. 3a. FIG. 3a shows an example of an SST group carried in allowed NSSAI/configured NSSAI/subscribed NSSAI, for example, an eMBB type and a URLLC type. A cell 1 (Cell 1) and a cell 2 (Cell 2) are at a geographical location 1 (Geographical Location 1), and a cell 3 (Cell 3) and a cell 4 (Cell 4) are at a geographical location 2 (Geographical Location 2).

For the cell 1, a supported access frequency is denoted as a frequency 2 (Frequency 2, F2), and supported network slices include a network slice 1 and a network slice 2 (Slice 1+Slice 2).

For the cell 2, a supported access frequency is denoted as a frequency 1 (Frequency 1, F1), and a supported network slice includes the network slice 1 (Slice 1).

For the cell 3, a supported access frequency is denoted as F2, and a supported network slice includes the slice 1.

For the cell 4, a supported access frequency is denoted as F1, and a supported network slice includes the slice 1.

In the scenario shown in FIG. 3a, a correspondence obtained based on an example of a slice group of a specific terminal device may be represented as follows:
Slice Group #1={Slice 1_eMBB type services};
Slice Group #2={Slice 2_URLLC type services}.

An implementation example is shown in FIG. 3b. FIG. 3b shows an example of a simple grouping correspondence performed based on an actual deployment status of a network slice in a current network. A cell 0 is located in a tracking area 0 (tracking area 0, TA0), a cell 1 is located in a tracking area 1 (tracking area 1, TA1), a cell 2 is located in a tracking area 2 (tracking area 2, TA2), and a cell 3 is located in a tracking area 3 (tracking area 3, TA3).

For the cell 0, a supported access frequency is denoted as a frequency 0 (Frequency 0, F0), and supported network slices include a network slice 1, a network slice 2, a network slice 3, and a network slice 4 (Slice 1, 2, 3, 4).

For the cell 1, a supported access frequency is denoted as F1, and supported network slices include the network slice 1 and the network slice 3 (Slice 1, 3).

For the cell 2, a supported access frequency is denoted as F2, and supported network slices include the network slice 1 and the network slice 2 (Slice 1, 2).

For the cell 3, a supported access frequency is denoted as a frequency 3 (Frequency 3, F3), and supported network slices include the network slice 2, the network slice 3, and the network slice 4 (Slice 2, 3, 4).

In the scenario shown in FIG. 3b, a correspondence obtained based on an example of a network slice group of a non-specific terminal device may be represented as follows:
Slice Group #1= { Slice 1, Slice 3};
Slice Group #2={Slice 1, Slice 2};
Slice Group #3={Slice 2, Slice 3, Slice 4};
Slice Group #4={Slice 1, Slice 2, Slice 3, Slice 4}.

Feature 3: A granularity of area validity corresponding to a correspondence between a network slice group and a network slice may be a TAIRA or a PLMN area.

Optionally, the TAIRA granularity indicates a dynamic correspondence, which is determined by a tracking area update (tracking area update, TAU).

Optionally, the PLMN granularity indicates a static correspondence, which is determined based on subscription information between the terminal device and an operator.

Currently, a mainstream selection is to support introduction of a network slice grouping mechanism (that is, Solution 3) different from Solution 1 and Solution 2 to avoid the foregoing problem. A reason is that in the SST-based grouping manner, network slices having different SDs may not be differentiated, and in the UAC AC-based grouping manner, because some network slices in a same AC are not supported by some access network devices, misalignment between the terminal device and the access network devices may be caused.

The terminal device may perform cell reselection based on a granularity of a network slice group by using the implementation process shown in FIG. 2.

Specifically, when the cell frequency used by the terminal device in the cell reselection process is configured based on the granularity of the network slice group, in step S201 of the implementation process shown in FIG. 2, the terminal device determines the priority information of the target network slice group, where the priority information indicates the priority of the target network slice group. Each network slice group in the target network slice group includes one or more network slices. Then, in step S202 of the implementation process shown in FIG. 2, the terminal device performs cell reselection based on the cell frequency that is associated with the target network slice group and determined based on the priority information.

Optionally, the target network slice group includes one network slice group. In a possible implementation, when the target network slice group includes one network slice group, the terminal device may not perform the process of "determining the priority information of the target network slice group" in step S201, but directly perform step S202 of "performing cell reselection based on a cell frequency associated with the target network slice group". In other words, when the target network slice group includes one network slice group, the terminal device determines the cell frequency associated with the target network slice group, and then the terminal device performs cell reselection based on the cell frequency associated with the target network slice group.

Specifically, in a process in which the terminal device performs cell reselection, the terminal device performs cell reselection based on the cell frequency associated with the target network slice group. In a network slicing scenario, when the cell frequency used by the terminal device in the cell reselection process is configured based on a granularity of a network slice group, the solution in which the terminal device performs cell reselection based on the cell frequency associated with the target network slice group enables the terminal device to perform cell reselection by using a network slice group as a granularity for cell reselection. Therefore, the cell reselection solution is applicable to a scenario in which communication is performed based on a network slice group, and can improve a cell reselection success rate and communication efficiency.

Optionally, in the target network slice group, each network slice group may be associated with one or more cell frequencies. When a network slice group is associated with a plurality of cell frequencies, the terminal device may separately perform cell reselection at the plurality of cell frequencies based on a frequency (reselection) priority configured (or preconfigured) by the network device.

Optionally, the terminal device may determine, based on a broadcast message of the network device, a cell frequency associated with each network slice group in the target network slice group.

Optionally, the terminal device may determine, based on a unicast message (for example, an RRC release message) of the network device, a cell frequency associated with each network slice group in the target network slice group.

In a possible implementation, that the terminal device performs cell reselection based on the cell frequency that is associated with the target network slice group and determined based on the priority information in step S202 includes: The terminal device performs cell reselection based on a target cell frequency, where the target cell frequency is one or more cell frequencies that are indicated by the priority information and associated with a network slice group with a highest priority in the target network slice group. Specifically, in the process in which the terminal device performs cell reselection based on the cell frequency that is associated with the target network slice group and determined based on the priority information in step S202, the terminal device may perform cell reselection at the one or more cell frequencies associated with the network slice group with the highest priority, to improve a success rate of performing cell reselection by the terminal device.

Optionally, in the process in which the terminal device performs cell reselection based on the target cell frequency in step S202, if the terminal device cannot find a neighboring cell that meets a camping condition after performing frequency sweep based on the target cell frequency, the terminal device performs cell reselection based on one or more cell frequencies associated with a network slice group with a second highest priority (or another priority) in the target network slice group.

Optionally, that the terminal device performs cell reselection based on the target cell frequency includes: The terminal device performs cell reselection based on a frequency priority corresponding to the target cell frequency. Similarly, the target cell frequency may include one or more cell frequencies, and the terminal device may determine the target cell frequency based on a frequency (reselection) priority configured (or preconfigured) by the network device, so that the terminal device performs cell reselection based on the frequency priority corresponding to the target cell frequency in step S202.

Further, optionally, the terminal device may determine, based on a broadcast message of the network device, the one or more cell frequencies associated with the network slice group with the highest priority in the target network slice group, that is, the target cell frequency; or the terminal device may determine, based on a unicast message (for example, an RRC release message) of the network device, the one or more cell frequencies associated with the network slice group with the highest priority in the target network slice group, that is, the target cell frequency.

In a possible implementation, the method further includes: The terminal device receives indication information from the network device, where the indication information indicates to perform cell reselection based on a frequency priority corresponding to a first cell frequency after cell reselection performed based on the target cell frequency fails, and the first cell frequency includes at least one of the following:
a cell frequency associated with one or more network slices included in a network slice set, where the network slice set includes a network slice that the terminal device expects to access; a cell frequency that is not associated with a network slice; a cell frequency associated with one or more network slice groups included in a network slice group set, where the network slice group set includes a network slice group corresponding to a network slice that the terminal device expects to access; a cell frequency that is not associated with a network slice group; or one or more cell frequencies that are indicated by the priority information and associated with a network slice group other than the network slice group with the highest priority in the target network slice group.

Optionally, when the first cell frequency does not include the one or more cell frequencies (denoted as second cell frequencies for ease of description) that are indicated by the priority information and associated with the network slice group other than the network slice group with the highest priority in the target network slice group, that the terminal device performs cell reselection based on the target cell frequency in step S202 includes: After the terminal device determines that cell reselection performed based on the target cell frequency fails, the terminal device performs cell reselection based on the second cell frequency. After the terminal device determines that cell reselection performed based on the second cell frequency fails, the terminal device performs cell reselection based on the first cell frequency.

In this implementation, the terminal device may further receive the indication information, so that in the process of performing cell reselection based on the target cell frequency in step S202, the terminal device may determine, based on the indication information, that after cell reselection performed based on the target cell frequency fails, the terminal device may perform cell reselection based on the frequency priority corresponding to the first cell frequency. In this way, when cell reselection performed based on the target cell frequency fails, the terminal device may further perform cell reselection based on the indication information, to further improve a success rate of performing cell reselection by the terminal device.

Optionally, in addition to the network slice that the terminal device expects to access, the network slice set may further include another network slice. This is not limited herein. For example, the network slice included in the network slice set may include configured S-NSSAI and/or allowed S-NSSAI, and there may be one or more pieces of configured S-NSSAI or allowed S-NSSAI. In addition, an identifier (for example, a network slice index or a network slice name) of the network slice included in the network slice set may be implemented in a form of a list, where the list may be referred to as a slice list (Slice List); or may be implemented in another form, for example, a mathematical relational expression, a bitmap, or another form. This is not limited herein.

Similarly, in addition to the network slice group corresponding to the network slice that the terminal device expects to access, the network slice group set may further include another network slice group. This is not limited herein. For example, a network slice included in any network slice group in the network slice group set may include configured S-NSSAI and/or allowed S-NSSAI, and there may be one or more pieces of configured S-NSSAI or allowed S-NSSAI. In addition, an identifier (for example, a network slice group index or a network slice group name) of the network slice group included in the network slice group set may be implemented in a form of a list, where the list may be referred to as a slice group list (Slice Group List); or may be implemented in another form, for example, a mathematical relational expression, a bitmap, or another form. This is not limited herein.

It can be learned from the foregoing implementations of the first cell frequency that the first cell frequency may include the foregoing plurality of implementations. For ease of description, the following uses an example in which a quantity of the foregoing "at least one" included in the first cell frequency is k for description, where k is greater than or equal to 1. The following further describes implementations of the indication information based on different values of k.

In a possible implementation, when a value of k is equal to 1, the first cell frequency may include one of the five items in the foregoing "at least one".

In another possible implementation, when a value of k is greater than 1, the first cell frequency may include at least two of the five items in the foregoing "at least one", and an execution sequence of the at least two items may not be limited.

In another possible implementation, when a value of k is greater than 1, the first cell frequency may include at least two of the five items in the foregoing "at least one", and the terminal device may determine an execution sequence of the at least two items in a configuration or preconfiguration manner.

For example, when the first cell frequency may include at least two of the five items in the foregoing "at least one", the terminal device may determine, in the configuration or preconfiguration manner, the execution sequence of the at least two items, which may be represented as follows:
the one or more cell frequencies that are indicated by the priority information and associated with the network slice group other than the network slice group with the highest priority in the target network slice group > the cell frequency associated with the one or more network slice groups included in the network slice group set > the cell frequency associated with the one or more network slices included in the network slice set > the cell frequency that is not associated with a network slice group = the cell frequency that is not associated with a network slice.

It should be understood that the foregoing implementations are merely examples. In actual application, there may be another implementation in which the terminal device may determine the execution sequence of the at least two items in the configuration or preconfiguration manner. This is not limited herein.

The following further describes implementations of the indication information with reference to more implementation examples.

In an implementation, the indication information is an information element with a variable value. In other words, the information element with the variable value indicates whether to perform cell reselection based on the frequency priority corresponding to the first cell frequency after cell reselection performed based on the target cell frequency fails.

For example, when a value of the indication information is a first value, the indication information indicates to perform cell reselection based on the frequency priority corresponding to the first cell frequency after cell reselection performed based on the target cell frequency fails. When a value of the indication information is a second value, the indication information indicates that cell reselection does not need to be performed based on the frequency priority corresponding to the first cell frequency after cell reselection performed based on the target cell frequency fails. The first value is different from the second value. The following further describes implementation processes of the first value and the second value with reference to more implementation examples.

In the implementations, when a value of k is equal to 1, the first cell frequency may include one of the five items in the foregoing "at least one".

Optionally, the value corresponding to the indication information may include a Boolean value, that is, the Boolean value indicates whether to perform cell reselection based on a frequency priority corresponding to one of the five frequencies. For example, the first value is "true (true)", and the second value is "false (false)". Alternatively, the value corresponding to the indication information may include a bit value, that is, the bit value indicates whether to perform cell reselection based on a frequency priority corresponding to one of the five frequencies. For example, when a quantity of bits occupied by the indication information is "1", the first value is "1", and the second value is "0"; or the first value is "0", and the second value is "1".

In the implementations, when a value of k is greater than 1, the first cell frequency may include at least two of the five items in the foregoing "at least one".

Optionally, the value corresponding to the indication information may include one Boolean value, that is, one Boolean value indicates whether to perform cell reselection based on frequency priorities corresponding to the at least two cell frequencies. Alternatively, the value corresponding to the indication information may include one bit value, that is, one bit value indicates whether to perform cell reselection based on frequency priorities corresponding to the at least two cell frequencies.

Optionally, the value corresponding to the indication information may include at least two Boolean values, that is, at least two Boolean values respectively indicate whether to perform cell reselection based on frequency priorities corresponding to the at least two cell frequencies. Alternatively, the value corresponding to the indication information may include at least two bit values, that is, at least two bit values respectively indicate whether to perform cell reselection based on frequency priorities corresponding to the at least two cell frequencies.

In another implementation, the indication information is an optional information element. In other words, the optional information element indicates whether to perform cell reselection based on the frequency priority corresponding to the first cell frequency after cell reselection performed based on the target cell frequency fails.

For example, when a message sent by the network device includes the indication information, it indicates to perform cell reselection based on the frequency priority corresponding to the first cell frequency after cell reselection performed based on the target cell frequency fails; or when a message sent by the network device does not include the indication information, it indicates that cell reselection does not need to be performed based on the frequency priority corresponding to the first cell frequency after cell reselection performed based on the target cell frequency fails.

It should be understood that the message sent by the network device may include a broadcast message, an RRC message, a MAC CE message, a DCI message, or the like, or may be another message. This is not limited herein.

In a possible implementation, the indication information includes at least one of the following: a quantity of times of performing cell reselection based on the first cell frequency, duration of performing cell reselection based on the first cell frequency, a start moment of performing cell reselection based on the first cell frequency, or an end moment of performing cell reselection based on the first cell frequency. For ease of description, a quantity of items included in the "at least one" herein is denoted as P below, where P is greater than or equal to 1.

Specifically, the indication information received by the terminal device may include at least one cell reselection manner in the "P items", so that when the terminal device fails to perform cell reselection based on the target cell frequency, the terminal device may further determine, based on the indication information, a reselection manner of performing cell reselection based on the first cell frequency, to further improve a success rate of performing cell reselection by the terminal device.

In the implementations, when a value of k is equal to 1, the first cell frequency may include one of the five items in the foregoing "at least one". In other words, the indication information may indicate, by using at least one of the P items, a reselection manner of performing cell reselection based on a frequency priority corresponding to one of the five frequencies.

In the implementations, when a value of k is greater than 1, the first cell frequency may include at least two of the five items in the foregoing "at least one".

Optionally, the indication information may include one piece of "at least one of the P items" information, to indicate, by using the one piece of "at least one of the P items" information, a reselection manner of performing cell reselection based on frequency priorities corresponding to the at least two cell frequencies.

Optionally, the indication information may include at least two pieces of "at least one of the P items" information, to respectively indicate, by using the at least two pieces of "at least one of the P items" information, a reselection manner of performing cell reselection based on frequency priorities corresponding to the at least two cell frequencies.

Based on the technical solution shown in FIG. 2, after the terminal device determines the priority information indicating the target network slice group, in a process of performing cell reselection by the terminal device, the terminal device performs cell reselection based on the cell frequency that is associated with the target network slice group and determined based on the priority information. In other words, the terminal device performs cell reselection based on a cell frequency that is associated with the target network slice group and determined based on the priority of the target network slice group. In a network slicing scenario, when the cell frequency used by the terminal device in the cell reselection process is configured based on a granularity of a network slice group, the solution in which the terminal device performs cell reselection based on the cell frequency that is associated with the target network slice group and determined based on the priority information enables the terminal device to perform cell reselection by using a network slice group as a granularity for cell reselection. Therefore, the cell reselection solution is applicable to a scenario in which communication is performed based on a network slice group, and can improve a cell reselection success rate and communication efficiency.

In addition, in the technical solution shown in FIG. 2, that is, in a cell reselection manner in which the terminal device determines a target cell based on priority information of a network slice group, the network device uses cell reselection information (for example, cell frequency information) associated with the network slice group as one piece of information to be sent to the terminal device, and uses slice information of a network slice included in the network slice group as another piece of information to be sent to the terminal device. In the separate sending manner (compared with a manner of sending through a same broadcast message), information transmission security can be improved, and broadcast overheads can be reduced.

In a possible implementation, in step S201 of the implementation process shown in FIG. 2, the target network slice group includes the network slice that the terminal device expects to access. Specifically, in a network slicing scenario, the target network slice group includes the network slice that the terminal device expects to access. In other words, the terminal device determines the target network slice group based on the network slice that the terminal device expects to access. Before the terminal device determines the priority information of the target network slice group, the terminal device may determine the target network slice group in advance based on one or more network slices that the terminal device expects to access. In other words, the target network slice group determined by the terminal device is a group of network slices that the terminal device expects to access. Therefore, after the terminal device performs cell reselection to a target cell based on the priority of the target network slice group, the terminal device may perform communication in the target cell, to obtain a network service (associated with a service) corresponding to the network slice that the terminal device expects to access.

For example, the network slice that the terminal device expects to access includes at least one of the following: a network slice indicated by an allowed (Allowed) single network slice selection assistance information (single network slice selection assistance information, NSSAI) information element, a network slice indicated by a requested NSSAI (Requested NSSAI) information element, a network slice indicated by a suspended NSSAI (suspended NSSAI) information element, or a network slice related to a mobile originated traffic (mobile originated traffic, MO traffic) service. The terminal device may determine, in different scenarios based on the network slice (denoted as a first network slice, or may be referred to as a target network slice (Intended Slice)) indicated in the foregoing plurality of manners, the network slice that the terminal device expects to access. For example, for a terminal device in an idle (Idle) state, the terminal device may determine one or more network slices indicated by allowed NSSAI as network slices that the terminal device expects to access. For another example, for a terminal device in an inactive (Inactive) state, the terminal device may determine one or more network slices indicated by suspended NSSAI as network slices that the terminal device expects to access. Therefore, a plurality of implementations are provided to implement communication in different scenarios.

Optionally, for a process of determining the first network slice by the terminal device (that is, a process of determining one or more network slices that the terminal device expects to access), refer to an implementation process of determining the target network slice by the terminal device in the foregoing "the terminal device performs cell reselection based on a granularity of a network slice". Details are not described herein again.

In another possible implementation, in step S201 of the implementation process shown in FIG. 2, the target network slice group is determined based on (at least) a correspondence between a network slice and a network slice group, and when the correspondence between a network slice and a network slice group (denoted as a first correspondence for ease of reference below) is invalid (or is not applicable, is not adapted, or the like) in a first area in which the terminal device is currently located, the target network slice group includes a default network slice. The first correspondence is a correspondence between a network slice and a network slice group, and the first area includes a registration area (registration area, RA), a tracking area (tracking area, TA), or a public land mobile network (public land mobile network, PLMN) area.

Specifically, because different areas (RA, TA, or PLMN area) may correspond to different correspondences between a network slice group and a network slice, the terminal device may determine a default network slice group as the target network slice group when the first correspondence is invalid in the first area in which the terminal device is currently located. In other words, the terminal device determines that the target network slice group includes the default network slice. In this way, the terminal device performs cell reselection based on a cell frequency associated with the default network slice group provided by the network device in the first area, to avoid a cell reselection failure.

Optionally, the default network slice group includes one or more default network slices. When the first correspondence is invalid in the first area in which the terminal device is located, the terminal device may determine that the target network slice group includes the default network slice group. A network slice included in the default network slice group may be specifically one or more default network slices (Default Slice) (defined by an operator).

Optionally, the first correspondence may be a correspondence that is between a network slice and a network slice group and that is indicated by the network device and last received by the terminal device. The correspondence that is between a network slice and a network slice group and that is indicated by the network device may be carried in a NAS message (or referred to as a unicast message).

Optionally, the first correspondence is associated with a second area, and the second area may include an RA, a TA, or a PLMN area. In other words, different areas (RA, TA, or PLMN) may be associated with different correspondences. In other words, in different areas (RA, TA, or PLMN), there may be different correspondences between a network slice and a network slice group. That the target network slice group is determined based on the first correspondence may include: The terminal device determines the target network slice group based on the first correspondence.

For example, the terminal device receives a system message, and the system message may include information indicating the first area in which the terminal device is currently located. When the first area indicated by the system message is the same as the second area associated with the first correspondence, the terminal device determines that the first correspondence is valid; or when the first area indicated by the system message is different from the second area associated with the first correspondence, the terminal device determines that the first correspondence is invalid.

In addition, in the cell reselection manner in which the terminal device determines the target cell based on the priority information of the network slice group, the terminal device may directly determine, based on the target network slice group, the target cell including a plurality of target network slices, so that the terminal device can more quickly obtain more types of network services in the target cell that supports communication based on the plurality of target network slices, to improve user experience.

In step S201 shown in FIG. 2, the terminal device may determine the priority information of the target network slice group based on a plurality of implementations. For example, the terminal device may determine the priority information based on an indication of the network device. For another example, the terminal device determines the priority information based on locally recorded historical slice information. The following separately provides descriptions with reference to specific implementation examples.

Implementation 1: In step S201 shown in FIG. 2, a process in which the terminal device determines the priority information of the target network slice group may specifically include: The terminal device receives the priority information from the network device. In other words, the terminal device determines the priority information based on an indication of the network device.

Optionally, the priority information and the foregoing "indication information indicating to perform cell reselection based on the frequency priority corresponding to the first cell frequency after cell reselection performed based on the target cell frequency fails" may be carried in a same message.

Optionally, the priority information is carried in first indication information, and the first indication information indicates at least the priority information.

Optionally, the first indication information further indicates a priority of a network slice group other than the target network slice group.

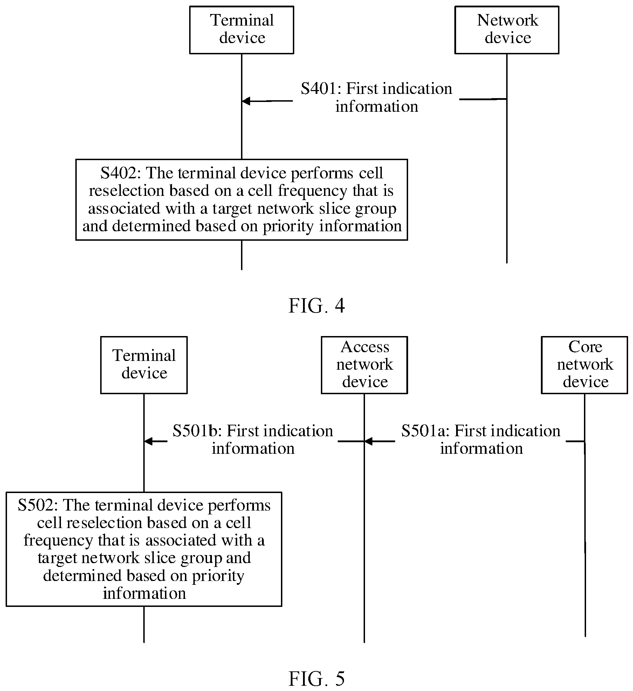

For example, in Implementation 1, an implementation process of the cell reselection method shown in FIG. 2 may be represented as an implementation process shown in FIG. 4. The implementation process of step S201 shown in FIG. 2 is implemented by "step S401 in which the terminal device receives the first indication information from the network device". For an implementation process of step S402, refer to the implementation process of step S202 shown in FIG. 2.

It should be noted that the terminal device receives the first indication information from the network device in step S401, and correspondingly, the network device sends the first indication information to the terminal device in step S401.

Specifically, the terminal device may determine the priority information of the target network slice group based on the first indication information sent by the network device, where the first indication information indicates at least the priority information. In this way, the terminal device can determine, based on an indication (for example, the first indication information) of the network device, a network slice group configured by the network device, thereby improving a success rate of subsequent cell reselection in step S402.

In addition, in the implementation process shown in FIG. 4, the network device may be specifically an access network device.

In an implementation example, the implementation process may be implemented by using a procedure shown in FIG. 5. A cell reselection method shown in FIG. 5 includes the following process.

S501a: A core network device sends first indication information to an access network device.

S501b: The access network device sends the first indication information to a terminal device.

S502: The terminal device performs cell reselection based on a cell frequency that is associated with a target network slice group and determined based on priority information (indicated by the first indication information).

Compared with the implementation process shown in FIG. 4, for step S502 shown in FIG. 5, refer to the implementation process of step S402. Step S401 shown in FIG. 4 is implemented by using step S501a and step S501b shown in FIG. 5. Before step S501b shown in FIG. 5, the access network device may receive, in step S501a, a NAS message that carries the first indication information and that is sent by the core network device. In step S501b, the access network device forwards the NAS message that carries the first indication information to the terminal device, so that the terminal device receives the first indication information.

Implementation 2: The priority information is determined based on a quantity and/or priority information of network slices included in each network slice group in the target network slice group. In other words, in step S201 shown in FIG. 2, a process in which the terminal device determines the priority information of the target network slice group specifically includes: The terminal device determines the priority information based on first information, where the first information indicates the quantity and/or priority information of network slices included in each network slice group in the target network slice group.

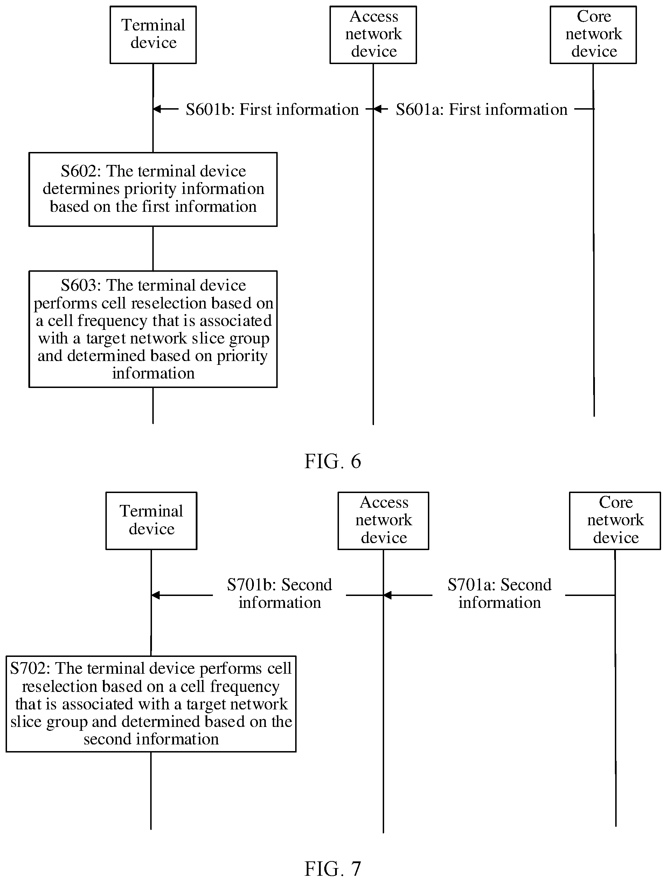

For example, in Implementation 2, an implementation process of the cell reselection method shown in FIG. 2 may be represented as an implementation process shown in FIG. 6. The implementation process of step S201 shown in FIG. 2 may be implemented by using "step S601a in which a core network device sends first information to an access network device", "step S601b in which the access network device sends the first information to a terminal device", and "step S602 in which the terminal device determines priority information based on the first information". For an implementation process of step S603, refer to the implementation process of step S202 shown in FIG. 2.

Specifically, before step S601b shown in FIG. 6, the access network device may receive, in step S601a, a NAS message that carries the first information and that is sent by the core network device. In step S601b, the access network device forwards the NAS message that carries the first information to the terminal device, so that the terminal device receives the first information. Then, in step S602, the terminal device may determine the priority information of the target network slice group based on information about a network slice included in the target network slice group indicated by the first information. In other words, in step S602, the terminal device determines the priority information based on the information (for example, priority information or quantity information) about the network slice included in the target network slice group. The first information is determined based on an indication of the network device in step S601b, so that the terminal device can determine, based on the indication (namely, the first information) of the network device, information about a network slice included in a network slice group configured by the network device, thereby improving a success rate of subsequent cell reselection in step S603 (namely, step S202 shown in FIG. 2).

In a possible implementation, the first information includes at least one of the following:
priority information of a network slice included in each network slice group in the target network slice group;
a priority value of a network slice included in each network slice group in the target network slice group;
a quantity of network slices included in each network slice group in the target network slice group;
priority information of a target network slice included in each network slice group in the target network slice group;
a priority value of a target network slice included in each network slice group in the target network slice group; or
a quantity of target network slices included in each network slice group in the target network slice group.

Specifically, the first information may be specifically one piece or a combination of the foregoing information. In addition to improving implementation flexibility of the terminal device, a basis for determining the priority information may be provided from information in a plurality of dimensions (for example, a dimension of priority information and a dimension of quantity information).

Optionally, in an implementation of Implementation 2, in a scenario in which the first information includes the priority information (denoted as second information) of the network slice included in each network slice group in the target network slice group, each network slice may appear in the target network slice group only once. In other words, in this scenario, network slices included in different network slice groups in the target network slice group are different (or network slices included in different network slice groups in the target network slice group do not include a same network slice). In this case, the implementation process shown in FIG. 2 may alternatively be implemented by using an implementation process shown in FIG. 7. The implementation process shown in FIG. 7 includes the following steps.

S701a: A core network device sends second information to an access network device.

S701b: The access network device sends the second information to a terminal device.

S702: The terminal device performs cell reselection based on a cell frequency that is associated with a target network slice group and determined based on the second information.

Specifically, a difference from the implementation process of the cell reselection method shown in FIG. 2 lies in that in the implementation shown in FIG. 7, after the terminal device receives the second information in step S701b, in step S702, the terminal device may determine, based on a priority of a network slice indicated by the second information, a network slice group corresponding to a network slice with a highest priority, and perform cell reselection based on a frequency associated with the network slice group. Compared with the implementations shown in FIG. 2 to FIG. 6, in the implementation process shown in FIG. 7, because network slices included in different network slice groups in the target network slice group are different, a priority of a network slice may be equivalent to a priority of a network slice group to which the network slice belongs. Therefore, in step S702, the terminal device may perform, based on the priority of the network slice (equivalent to a priority of the target network slice group) indicated by the second information, cell reselection at the cell frequency associated with the target network slice group. This provides a solution in the special scenario shown in FIG. 7.

Implementation 3: In step S201 shown in FIG. 2, a process in which the terminal device determines the priority information of the target network slice group specifically includes: The terminal device determines the priority information based on information about a historically used (or historically accessed) network slice.

Specifically, the terminal device may determine the priority information of the target network slice group based on the information about the network slice historically used by the terminal device. The information about the historically used network slice may reflect specific information (for example, service preference information or duration) of the terminal device to some extent, so that the terminal device performs, in step S202 shown in FIG. 2, cell reselection based on the priority information determined based on the information about the historically accessed network slice. The determined target cell can provide a network service corresponding to the specific information of the terminal device, to improve user experience.

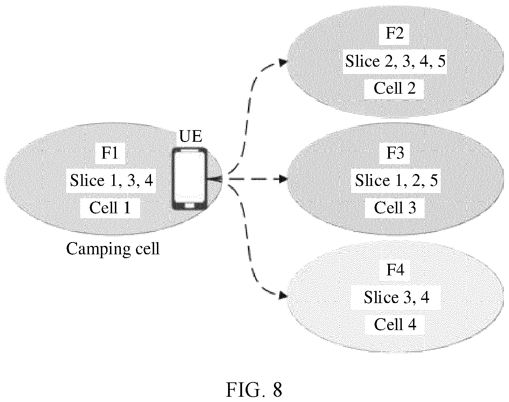

With reference to a communication scenario shown in FIG. 8, the following describes the implementation processes (Implementation 1, Implementation 2, and Implementation 3) shown in FIG. 2 to FIG. 6.

For example, in FIG. 8, a cell 1 is a camping cell (Camping Cell) of a terminal device (denoted as UE), and a cell 2, a cell 3, and a cell 4 are candidate cells of the UE.

For the cell 1, a supported access frequency is denoted as F1, and supported network slices include a network slice 1, a network slice 3, and a network slice 4 (Slice 1, 3, 4).

For the cell 2, a supported access frequency is denoted as F2, and supported network slices include a network slice 2, the network slice 3, the network slice 4, and a network slice 5 (Slice 2, 3, 4, 5).

For the cell 3, a supported access frequency is denoted as F3, and supported network slices include the network slice 1, the network slice 2, and the network slice 5 (Slice 1, 2, 5).

For the cell 4, a supported access frequency is denoted as F4, and supported network slices include the network slice 3 and the network slice 4 (Slice 3, 4).

In an implementation example of the scenario shown in FIG. 8, a correspondence (determined based on Solution 1, Solution 2, Solution 3, or another solution) between different network slice groups and a plurality of network slices may include the following.

A network slice group 1 corresponds to the network slice 1, the network slice 3, and the network slice 4, and this is denoted as SG1={S1, S3, S4}.

A network slice group 2 corresponds to the network slice 2, the network slice 3, the network slice 4, and the network slice 5, and this is denoted as SG2={S2, S3, S4, S5}.

A network slice group 3 corresponds to the network slice 1, the network slice 2, and the network slice 5, and this is denoted as SG3={S1, S2, S5}.

A network slice group 4 corresponds to the network slice 3 and the network slice 4, and this is denoted as SG4={S3, S4}.

The foregoing four cells are located in a same RA (or TA or PLMN area). In other words, the correspondence based on the foregoing grouping is valid in all the four cells.

In addition, it is further assumed that an ascending order of slice priorities meets:
the network slice 1, the network slice 2, the network slice 3, the network slice 4, and the network slice 5, denoted as P(S1)<P(S2)<P(S3)<P(S4)<P(S5).

In addition, it is assumed that a sum of a priority of the network slice 3 and a priority of the network slice 4 is the same as a sum of priorities of the network slice 2 and the network slice 5, and this is denoted as P(S3)+P(S4)=P(S2)+P(S5).

It should be noted that step 1 and step 2 in any one of the following implementation example 1 to implementation example 6 are an implementation example of step S201 in the foregoing embodiment in FIG. 2, and step 3 in any one of the following implementation example 1 to implementation example 6 is an implementation example of step S202 in the foregoing embodiment in FIG. 2.

Implementation example 1: is an implementation example of Implementation 1.

In the implementation example 1, it is assumed that the terminal device determines that a target network slice is the network slice 3 (denoted as Intended Slice=S3). Specific steps are as follows.

Step 1: The terminal device determines a target network slice group corresponding to (one or more) target network slices.

A NAS of the terminal device determines that the target network slice is S3, and the terminal device determines that a correspondence between a target network slice group and associated NSSAI is valid in a current RA (or TA or PLMN area). In this case, the terminal device finds a corresponding target network slice group based on S-NSSAI of S3 by using the correspondence. In other words, the terminal device determines that the target network slice group is the network slice group 1, the network slice group 2, and the network slice group 4 (denoted as SG1, SG2, and SG4).

Step 2: The terminal device determines priority information of the target network slice group based on a NAS message (from a CN).

Optionally, after step 1, the terminal device may perform filtering in step 2 based on a quantity of target network slices included in each network slice group in the target network slice group. Because a quantity of target network slices (that is, S3) included in each of SG1, SG2, and SG4 is 1, the terminal device determines that the target network slice group does not need to be filtered and excludes some network slice groups.

Optionally, a process in which the terminal device determines that the target network slice group includes the network slice group 1, the network slice group 2, and the network slice group 4 may include the following two implementations.

Manner 1: The NAS of the terminal device learns, based on the target network slice, that is, S3, by using the correspondence, that the target network slice group is the network slice group 1, the network slice group 2, and the network slice group 4 (denoted as Intended Slice Group ID(s)=SG1, SG2, SG4).

Manner 2: The NAS of the terminal device forwards S-NSSAI of the target network slice, that is, S3, and the correspondence to an AS, and then the AS learns, based on the S-NSSAI of S3 by using the correspondence, that the target network slice group is the network slice group 1, the network slice group 2, and the network slice group 4 (denoted as Intended Slice Group ID(s)=SG1, SG2, SG4).

It can be learned from the foregoing process that the target network slice group is the network slice group 1, the network slice group 2, and the network slice group 4. In this embodiment, the priority of the target network slice group may be obtained from a NAS message that is directly sent by the CN to the terminal device through the NAS. A priority form of the target network slice group may be a specific value assigned to a priority corresponding to each target network slice group, or may be a target network slice group ID list obtained through sorting according to a specific rule.

In this embodiment, the following implementation process may be obtained based on the foregoing condition described in the scenario shown in FIG. 8.

It is known that the priority information that is corresponding to the target network slice group and that is provided by the CN may be represented as follows: A priority sequence meets P(SG4)<P(SG2)<P(SG3)<P(SG1). Therefore, the priority information that is corresponding to the target network slice group and that is provided by the CN may be represented as follows: Target network slice group priorities may be represented as list={SG1, SG2, SG4} in descending order.

Optionally, a process in which the terminal device determines the priority information of the target network slice group based on the NAS message (from the CN) may include the following two implementations.

Manner 1: The NAS of the terminal device obtains the priority of the target network slice group based on the priority information that is of the target network slice group and that is directly provided by the CN.

Manner 2: The NAS of the terminal device forwards, to the AS, the priority information that is of the target network slice group and that is directly provided by the CN, and then the AS obtains the priority of the target network slice group based on the information.

Step 3: The terminal device performs cell reselection based on the priority information of the target network slice group obtained in step 2.

Optionally, in step 3, the terminal device performs cell reselection based on a frequency priority corresponding to a target network slice group with a highest priority. For example, it can be learned from step 2 that the target network slice group with the highest priority is SG1, and cell reselection of the terminal device is performed based on a broadcast frequency (reselection) priority corresponding to SG1.

Implementation example 2: is an implementation example of Implementation 2.

In an implementation of the implementation example 2, it is assumed that the terminal device determines that a target network slice is the network slice 1 (denoted as Intended Slice=S 1). Specific steps are as follows.

Step 1: The terminal device determines a target network slice group corresponding to a target network slice.

ANAS of the terminal device determines that the target network slice is S1, and it is known that a correspondence between a target network slice group and associated NSSAI is valid in a current RA. In this case, a corresponding target network slice group, for example, SG1 and SG3, is found based on S-NSSAI of S1 by using the correspondence.

Step 2: The terminal device determines priority information of the target network slice group based on first information.

Specifically, the terminal device determines a priority of the target network slice group based on the first information (including a quantity of network slices associated with the target network slice group and a priority corresponding to each network slice).

In step 2, an implementation form of the priority information may be a specific value assigned to a priority corresponding to each target network slice group, or may be a target network slice group list obtained through sorting according to a specific rule.

Optionally, in the implementation example 2, that the information included in the first information sequentially participates in a determining process of "determining the priority information" includes the following implementation.
(1) In step 2, the terminal device may perform filtering based on a quantity of target network slices included in each network slice group in the target network slice group, to determine the priority information. Because a quantity of target network slices (that is, S1) included in each of SG1 and SG3 is 1, the target network slice group is the network slice group 1 and the network slice group 3 (denoted as Intended Slice Group ID(s)=SG1, SG3).

Optionally, the foregoing process may further include two implementations.

Manner 1: The NAS of the terminal device learns, based on the target network slice, that is, S1, by using the correspondence, that the target network slice group is the network slice group 1 and the network slice group 3 (denoted as Intended Slice Group ID(s)=SG1, SG3).

Manner 2: The NAS of the terminal device forwards S-NSSAI of the target network slice, that is, S1, and the correspondence to an AS, and then the AS learns, based on the S-NSSAI of S1 by using the correspondence, that the target network slice group is the network slice group 1 and the network slice group 3 (denoted as Intended Slice Group ID(s)=SG1, SG3).

(2) In step 2, the terminal device may determine the priority information based on a slice quantity of network slices included in each network slice group in the target network slice group. Specifically, the terminal device sets a priority based on a quantity of network slices associated with the target network slice group. A larger quantity of network slices associated with the target network slice group corresponds to a higher priority of the target network slice group. In this embodiment, both SG1 and SG3 are associated with three network slices. Therefore, priorities further need to be differentiated.

(3) In step 2, the terminal device may determine the priority information based on a priority of a network slice included in each network slice group in the target network slice group. Specifically, the terminal device sets a priority based on a sum of network slice priorities corresponding to network slices associated with the target network slice group. A larger sum of priorities of the network slices associated with the target network slice group corresponds to a higher priority of the target network slice group. In this embodiment, because it is known that P(S3)+P(S4)=P(S2)+P(S5), that is, Sum(P(S1), P(S3), P(S4))=Sum(P(S1), P(S2), P(S5)), priorities of SG1 and SG3 further need to be differentiated.
Optionally, the following describes an implementation process of how to specifically determine the priority of the target network slice group. Values and a sum (Sum) of network slice priorities provided in this embodiment are logical concepts of the priorities. To be specific, P(Sx) represents only a priority of Sx. The priority may be a specific value (denoted as value), or may be a priority sequence obtained by sorting a plurality of network slices. For example, P(Sx)<P(Sy) may be obtained through comparison based on P(Sx)=1 and P(Sy)=0 that are known (in an implementation in a base station, a smaller value indicates a higher priority, but this is merely an example, and there may be a relationship in which a larger value indicates a higher priority); or may be obtained by sorting known priorities of a plurality of network slices.
Optionally, a method for determining the priority of the target network slice group is similar to the foregoing method. If a network slice priority is obtained based on a priority sequence obtained by sorting a plurality of network slices, to further calculate the priority of the target network slice group by using the sum, a value needs to be first assigned to the network slice priority. A specific implementation is not limited.

(4) In step 2, the terminal device may determine the priority information based on priority information of a network slice included in the target network slice group.

Specifically, the terminal device sets a priority of each network slice group in the target network slice group based on a priority corresponding to a network slice with a highest priority associated with the network slice group. A higher priority corresponding to the network slice with the highest priority associated with the target network slice group corresponds to a higher priority of the target network slice group. If network slices with the highest priority correspond to a same priority, a network slice with the highest priority continues to be found in remaining slices, and so on, until the priority of the target network slice group is differentiated. In this embodiment, a priority corresponding to a network slice with a highest priority in network slices associated with SG1 is P(S4), and a priority corresponding to a network slice with a highest priority in network slices associated with SG3 is P(S5). According to P(S4)<P(S5), it may be learned that priorities of target network slice groups are P(SG1)=P(S4), and P(SG3)=P(S5), that is, P(SG1)<P(SG3), or priorities of target network slice groups are represented as list={SG3, SG1} in descending order.

Optionally, an implementation process of step 2 may include the following two implementations.

Manner 1: ANAS of the terminal device obtains the priority of the target network slice group based on an identifier of the target network slice group, a quantity of network slices associated with the target network slice group, and a priority corresponding to each network slice.

Manner 2: ANAS of the terminal device forwards an identifier of the target network slice group, a quantity of network slices associated with the target network slice group, and a priority corresponding to each network slice to an AS, and then the AS obtains the priority of the target network slice group based on the foregoing information.

Step 3: The terminal device performs cell reselection based on the priority information obtained in step 2.

Optionally, in step 3, the terminal device performs cell reselection based on a frequency priority corresponding to a target network slice group with a highest priority. For example, it can be learned from step 2 that the target network slice group with the highest priority is SG3, and cell reselection of the terminal device is performed based on a broadcast frequency (reselection) priority corresponding to SG3.

In another implementation of the implementation example 2, it is assumed that the terminal device determines, in the network slices included in the network slice set, that a target network slice is the network slice 2 (denoted as Intended Slice=S2). Specific steps are as follows.

Step 1: The terminal device determines a target network slice group corresponding to a target network slice.

ANAS of the terminal device determines that the target network slice is S2, and it is known that a correspondence between a target network slice group and associated NSSAI is valid in a current RA. In this case, a corresponding target network slice group, that is, SG2 and SG3, is found based on S-NSSAI of S2 by using the correspondence.

Step 2: The terminal device determines priority information of the target network slice group based on first information.

Specifically, the terminal device determines a priority of the target network slice group based on the first information (including a quantity of network slices associated with the target network slice group and a priority corresponding to each network slice) in step 2.

In step 2, an implementation form of the priority information may be a specific value assigned to a priority corresponding to each target network slice group, or may be a target network slice group list obtained through sorting according to a specific rule.

Optionally, an implementation process of step 2 may include the following two implementations.

Manner 1: ANAS of the terminal device obtains the priority of the target network slice group based on an identifier of the target network slice group, a quantity of network slices associated with the target network slice group, and a priority corresponding to each network slice.

Manner 2: ANAS of the terminal device forwards an identifier of the target network slice group, a quantity of network slices associated with the target network slice group, and a priority corresponding to each network slice to an AS, and then the AS obtains the priority of the target network slice group based on the foregoing information.

Optionally, when the target network slice is the network slice 2, for a determining process in which the terminal device sequentially participates in "determining the priority information" based on the information included in the first information in step 2, refer to the foregoing determining process corresponding to the case in which the target network slice is the network slice 1. Details are not described herein again.

For example, in step 2, the terminal device may determine the priority information based on a slice quantity of network slices included in each network slice group in the target network slice group. Specifically, the terminal device sets a priority based on a quantity of network slices associated with the target network slice group. A larger quantity of network slices associated with the target network slice group corresponds to a higher priority of the target network slice group. In this embodiment, SG2 is associated with four slices, and SG3 is associated with three slices. It may be learned that a priority of SG2 is higher than a priority of SG3, and this is denoted as P(SG3)<P(SG2), or intended slice group ID priorities are represented as list *L_{PSG}* ={SG2, SG3} in descending order.

Step 3: The terminal device performs cell reselection based on the priority information obtained in step 2.

Optionally, in step 3, the terminal device performs cell reselection based on a frequency priority corresponding to a target network slice group with a highest priority. For example, it can be learned from step 2 that the target network slice group with the highest priority is SG2, and cell reselection of the terminal device is performed based on a broadcast frequency (reselection) priority corresponding to SG2.

It should be noted that, in this embodiment, it is assumed that the network slices included in the network slice set determined by the terminal device include the network slice 1 and the network slice 2 (for example, when the network slice set is implemented by using a slice list, the network slice set may be denoted as Slice List={S1, S2}, where S1 is not an intended slice of the terminal device). Alternatively, in this embodiment, it is assumed that a network slice included in any network slice group in the network slice group set determined by the terminal device includes the network slice 1 or the network slice 2 (for example, when the network slice group set is implemented by using a slice group list, the network slice group set may be denoted as Slice Group List={SG1, SG2, SG3}, where SG1 does not include an intended slice of the terminal device).

In a possible implementation, before step 3, the network device further sends indication information. Correspondingly, the terminal device receives the indication information from the network device, where the indication information indicates to perform cell reselection based on a frequency priority corresponding to a first cell frequency after cell reselection performed based on the target cell frequency fails, and the first cell frequency includes at least one of the following:
a cell frequency associated with one or more network slices included in a network slice set, where the network slice set includes a network slice that the terminal device expects to access; a cell frequency that is not associated with a network slice; a cell frequency associated with one or more network slice groups included in a network slice group set, where the network slice group set includes a network slice group corresponding to a network slice that the terminal device expects to access; a cell frequency that is not associated with a network slice group; or one or more cell frequencies that are indicated by the priority information and associated with a network slice group other than the network slice group with the highest priority in the target network slice group.

In this implementation, the terminal device may further receive the indication information, so that in the process of performing cell reselection based on the target cell frequency (one or more cell frequencies corresponding to SG2) in step 3, the terminal device may determine, based on the indication information, that after cell reselection performed based on the target cell frequency fails, the terminal device may perform cell reselection based on the frequency priority corresponding to the first cell frequency. In this way, when cell reselection performed based on the target cell frequency fails, the terminal device may further perform cell reselection based on the indication information, to further improve a success rate of performing cell reselection by the terminal device.

Optionally, when the first cell frequency does not include the one or more cell frequencies (denoted as second cell frequencies for ease of description) that are indicated by the priority information and associated with the network slice group other than the network slice group with the highest priority in the target network slice group, that the terminal device performs cell reselection in step 3 includes: After the terminal device determines that cell reselection performed based on the one or more cell frequencies corresponding to SG2 fails, the terminal device performs cell reselection based on the second cell frequency (that is, one or more cell frequencies corresponding to SG3). After the terminal device determines that cell reselection performed based on the second cell frequency fails, the terminal device performs cell reselection based on the first cell frequency.

It should be understood that the indication information may be an information element with a variable value (for example, one or more Boolean values, or one or more bit values), or the indication information may be an optional information element. For an implementation of the indication information, refer to related descriptions in step S202. Corresponding technical effects are implemented. Details are not described herein again.

For example, when the indication information sent by the network device indicates to perform cell reselection based on the frequency priority corresponding to the first cell frequency after cell reselection performed based on the target cell frequency fails, the terminal device may perform a plurality of cell reselection processes based on a plurality of implementations of the first cell frequency in step 3. The following provides descriptions with reference to some implementation examples.

In an implementation example, when the first cell frequency includes a cell frequency associated with one or more network slices included in the network slice set, as described in the foregoing assumption, "Slice List={S1, S2}". In this example, after the terminal device fails to perform cell reselection based on the one or more cell frequencies corresponding to SG2 in step 3, the terminal device replaces "Intended Slice=S2" in step 1 with "Intended Slice=S1", and repeatedly performs step 1 to step 3.

In another implementation example, when the first cell frequency includes one or more cell frequencies associated with a network slice group included in the network slice group set, as described in the foregoing assumption, "Slice Group List={SG1, SG2, SG3}". In this example, after the terminal device fails to perform cell reselection based on the one or more cell frequencies corresponding to SG2 in step 3, the terminal device performs cell reselection based on one or more cell frequencies corresponding to SG1 and SG3.

In another implementation example, when the first cell frequency includes the one or more cell frequencies that are indicated by the priority information and associated with the another network slice group other than the network slice group with the highest priority in the target network slice group, it can be learned from step 1 that the "another network slice group" includes SG3. In this example, after the terminal device fails to perform cell reselection based on the one or more cell frequencies corresponding to SG2 in step 3, the terminal device performs cell reselection based on one or more cell frequencies corresponding to SG3.

In another implementation example, when the first cell frequency includes the cell frequency that is not associated with a network slice and/or the cell frequency that is not associated with a network slice group, after the terminal device fails to perform cell reselection based on the one or more cell frequencies corresponding to SG2 in step 3, the terminal device falls back to a legacy (legacy) cell reselection procedure. In other words, in this example, one or more cell frequencies included in the first cell frequency do not need to be determined based on a network slice (and/or a network slice group).

It should be noted that, in the foregoing example, that the first cell frequency may include any one of the five items in the foregoing "at least one" is used as an example for description. When the first cell frequency may include at least two of the five items in the foregoing "at least one", the terminal device may determine, in the configuration or preconfiguration manner, the execution sequence of the at least two items. For an implementation process of each of the at least two items, refer to the description of the foregoing example. Details are not described herein again.

Implementation example 3: is an implementation example of Implementation 2.

In the implementation example 3, it is assumed that the terminal device determines that target network slices are the network slice 1, the network slice 2, and the network slice 4 (denoted as Intended Slice=S1, S2, S4). Specific steps are as follows.

Step 1: The terminal device determines a target network slice group corresponding to a target network slice.

ANAS of the terminal device determines that the target network slices are S1, S2, and S4, and it is known that a correspondence between a target network slice group and associated NSSAI is valid in a current RA. In this case, a corresponding target network slice group, that is, SG1, SG2, SG3, and SG4, is found based on S-NSSAI of S1, S2, and S4 by using the correspondence.

Step 2: The terminal device determines priority information of the target network slice group based on first information.

Specifically, the terminal device determines a priority of the target network slice group based on the first information (including a quantity of network slices associated with the target network slice group and a priority corresponding to each network slice) in step 2.

In step 2, an implementation form of the priority information may be a specific value assigned to a priority corresponding to each target network slice group, or may be a target network slice group list obtained through sorting according to a specific rule.

Optionally, in the implementation example 3, that the information included in the first information sequentially participates in a determining process of "determining the priority information" includes the following implementation.
(1) In step 2, the terminal device may perform filtering based on a quantity of target network slices included in each network slice group in the target network slice group, to determine the priority information. Quantities of target network slices (that is, S1, S2, and S4) included in SG1, SG2, SG3, and SG4 are (2, 2, 2, 1), that is, Intended Slice Group ID(s)=SG1, SG2, SG3.

Optionally, the foregoing process may further include two implementations.

Manner 1: The NAS of the terminal device learns, based on the target network slices, that is, S1, S2, and S4, by using the correspondence, that the target network slice group is the network slice group 1, the network slice group 2, and the network slice group 3 (denoted as Intended Slice Group ID(s)=SG1, SG2, SG3).

Manner 2: The NAS of the terminal device forwards S-NSSAI of the target network slices, that is, S1, S2, and S4, and the correspondence to an AS, and then the AS learns, based on the S-NSSAI of S1, S2, and S4 by using the correspondence, that the target network slice group is the network slice group 1, the network slice group 2, and the network slice group 3 (denoted as Intended Slice Group ID(s)=SG1, SG2, SG3).

(2) In step 2, the terminal device may determine the priority information based on a slice quantity of network slices included in each network slice group in the target network slice group. Specifically, the terminal device sets a priority based on a quantity of slices associated with the target network slice group. A larger quantity of slices associated with the target network slice group corresponds to a higher priority of the target network slice group. In this embodiment, SG1, SG2, and SG3 are respectively associated with three, four, and three network slices. Therefore, it can be learned that a priority corresponding to SG2 is the highest, and priorities of SG1 and SG3 further need to be differentiated (a remaining procedure in step 2 is similar to that in the implementation example 2, and for details, refer to the foregoing implementation process).

In conclusion, it can be learned that the priority of the target network slice group is P(SG1)<P(SG3)<P(SG2), or the priority of the target network slice group is represented as list={SG2, SG3, SG1} in descending order.

Optionally, the foregoing process may further include two implementations.

Manner 1: ANAS of the terminal device obtains the priority of the target network slice group based on an identifier of the target network slice group, a quantity of slices associated with the target network slice group, and a priority corresponding to each network slice.

Manner 2: A NAS of the terminal device forwards an identifier of the target network slice group, a quantity of slices associated with the target network slice group, and a priority corresponding to each network slice to an AS, and then the AS obtains the priority of the target network slice group based on the foregoing information.

Step 3: Perform cell reselection based on a frequency priority corresponding to a target network slice group with a highest priority.

It can be learned from step 2 that the target network slice group with the highest priority is SG2, and cell reselection of the terminal device is performed based on a broadcast frequency (reselection) priority corresponding to SG2.

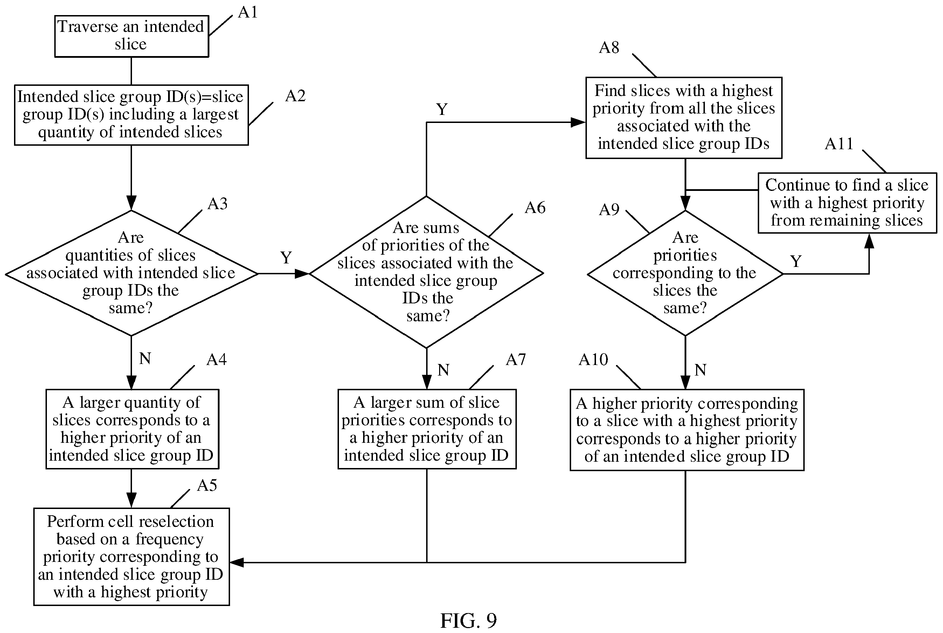

In a possible implementation of the implementation example 2 and the implementation example 3, any one of the implementation example 2 and the implementation example 3 may be implemented by using a process shown in FIG. 9. In an example shown in FIG. 9, a target network slice is denoted as an intended slice, and an identifier of a target network slice group is denoted as an intended slice group ID(s).

The process shown in FIG. 9 specifically includes the following steps.
A1: The terminal device traverses an intended slice.
A2: The terminal device determines that intended slice group ID(s)=slice group(s) including a largest quantity of intended slices.
A3: The terminal device determines whether quantities of slices associated with a plurality of intended slice group IDs are the same. If the quantities are the same, step A6 is performed; or if the quantities are not the same, step A4 is performed.
A4: When the terminal device determines, in step A3, that the quantities of slices associated with the plurality of intended slice group IDs are different, the terminal device determines that a larger quantity of slices corresponds to a higher priority of an intended slice group ID, and performs step A5.
A5: The terminal device performs cell reselection based on a frequency priority corresponding to an intended slice group ID with a highest priority.
   Optionally, before step A5, the terminal device may receive, from the network device, "indication information indicating to perform cell reselection based on the frequency priority corresponding to the first cell frequency after cell reselection performed based on the target cell frequency fails". In this case, in an implementation process of step A5, if the terminal device fails to perform cell reselection based on the frequency priority corresponding to the intended slice group ID with the highest priority, the terminal device further needs to perform cell reselection at the first cell frequency based on the indication information. For a plurality of implementations of the "indication information" and the "first cell frequency", refer to the foregoing descriptions. Details are not described herein again.
A6: When the terminal device determines, in step A3, that the quantities of slices associated with the intended slice group IDs are the same, the terminal device determines whether sums of slice priorities of network slices associated with the plurality of intended slice group IDs are the same. If the sums are the same, step A8 is performed; or if the sums are not the same, step A7 is performed.
A7: When the terminal device determines, in step A6, that the sums of the slice priorities of the network slices associated with the plurality of intended slice group IDs are different, the terminal device determines that a larger sum of network slice priorities corresponds to a higher priority of an intended slice group ID, and performs step A5.
A8: When the terminal device determines, in step A6, that the sums of the slice priorities of the network slices associated with the plurality of intended slice group IDs are the same, the terminal device finds slices with a highest priority from the slices associated with the intended slice group IDs, and performs step A9.
A9: The terminal device determines whether priorities corresponding to the slices are the same. If the priorities are the same, step A11 is performed; or if the priorities are not the same, step A10 is performed.
A10: When the terminal device determines, in step A9, that the priorities corresponding to the slices are different, the terminal device determines that a higher priority corresponding to a slice with a highest priority corresponds to a higher priority of an intended slice group ID, and performs step A5.
A11: When determining, in step A9, that the priorities corresponding to the slices are the same, the terminal device continues to find a slice with a highest priority from remaining slices, and performs step A9.

Optionally, when the terminal device determines, in step A5, that a correspondence between a network slice and a network slice group (for an implementation process of the correspondence, refer to the foregoing description in FIG. 2, and details are not described herein again) is invalid (or is not applicable, is not adapted, or the like) in a first area in which the terminal device is currently located, the terminal device determines that cell reselection cannot be performed based on a frequency priority corresponding to the intended slice group ID with the highest priority determined in step A4 (or step A7 or step A10). Then, the terminal device may perform cell reselection based on a frequency priority corresponding to a default network slice group including one or more default network slices, to improve a cell reselection success rate.

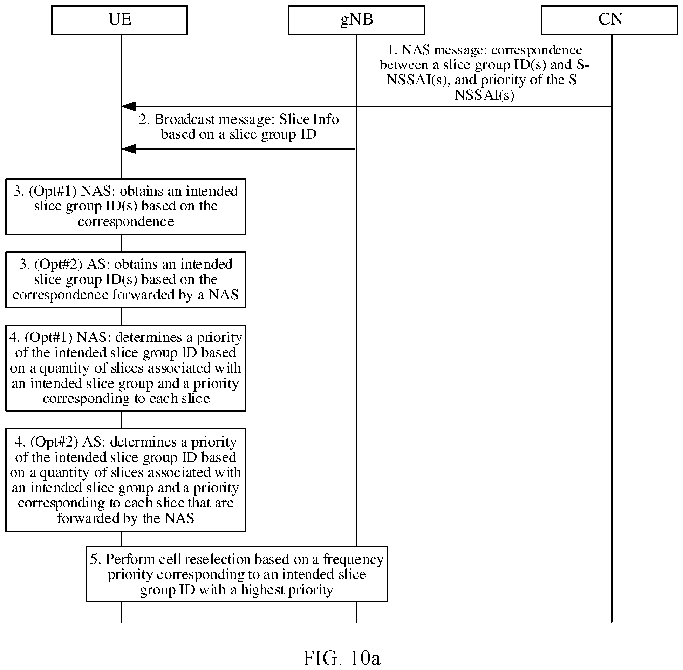

In an implementation example, the implementation processes of the foregoing implementation example 2 and implementation example 3 may alternatively be implemented by using a process shown in FIG. 10a. As shown in FIG. 10a, the process includes the following steps.

It should be noted that in the implementation example shown in FIG. 10a, an example in which the terminal device is denoted as UE and network devices include an access network device denoted as a gNB and a core network device denoted as a CN is used for description.
1. The CN sends a NAS message to the UE through the gNB. The NAS message includes a correspondence between a slice group ID(s) and S-NSSAI(s), and a priority of the S-NSSAI(s).
2. The gNB sends a broadcast message to the UE. The broadcast message includes network slice information (Slice Info) based on a slice group ID. For example, the Slice Info includes cell frequency information.
3. In an optional implementation 1 (Opt#1), a NAS of the UE obtains an intended slice group ID(s) based on the correspondence.
3. In an optional implementation 2 (Opt#2), an AS of the UE obtains an intended slice group ID(s) based on the correspondence forwarded by a NAS.
4. In an optional implementation 1 (Opt#1), the NAS of the UE determines a priority of the intended slice group ID based on a quantity of slices associated with the intended slice group ID(s) and a priority corresponding to each slice.
4. In an optional implementation 2 (Opt#2), the AS of the UE determines a priority of the intended slice group ID based on a quantity of slices associated with the intended slice group ID(s) and a priority corresponding to each slice that are forwarded by the NAS.
5. The UE and the gNB perform cell reselection based on a frequency priority corresponding to an intended slice group ID with a highest priority.

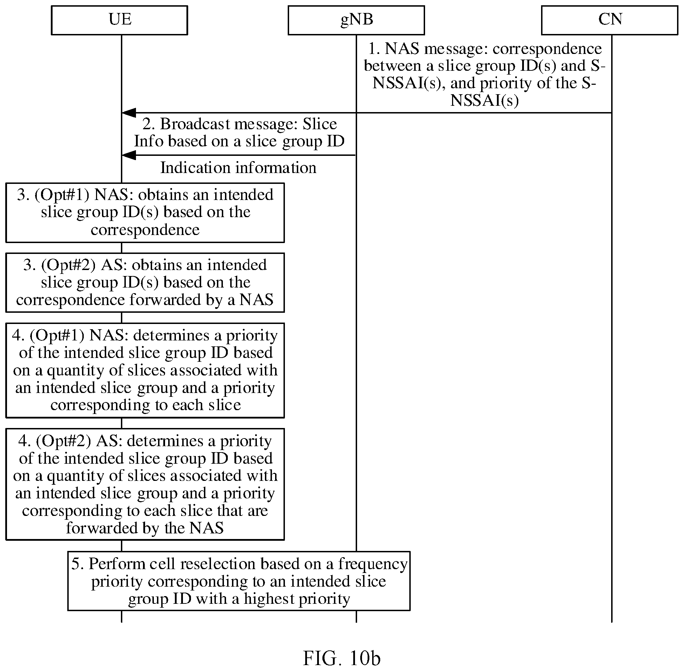

Optionally, the process shown in FIG. 10a may alternatively be implemented by using a process shown in FIG. 10b. A difference between the two processes lies in an implementation of step 2, and other steps are the same. In step 2 in FIG. 10b, the broadcast message may further include "indication information indicating to perform cell reselection based on the frequency priority corresponding to the first cell frequency after cell reselection performed based on the target cell frequency fails". For a plurality of implementations of the "indication information" and the "first cell frequency", refer to the foregoing descriptions. Details are not described herein again. Therefore, in step 5 shown in FIG. 10b, when the terminal device fails to perform cell reselection based on the frequency priority corresponding to the intended slice group ID with the highest priority, the terminal device may perform cell reselection based on the first cell frequency indicated by the indication information, to improve a cell reselection success rate of the terminal device.

It should be understood that, in FIG. 10b, an example in which the "indication information" is carried in the broadcast message in step 2 is used for description. In actual application, the "indication information" may alternatively be carried in another message, for example, an RRC message, a MAC CE message, or a DCI message, or may be another message. This is not limited herein.

Therefore, based on the implementation solutions of the implementation example 2 and the implementation example 3, system overheads can be reduced, transmission security can be ensured, and a priority of a slice group ID is determined to adapt to a solution of performing cell reselection based on a granularity of a network slice group and a service scenario triggered by MO.

Implementation example 4: is an implementation example of Implementation 2.

In the implementation example 4, it is assumed that the terminal device determines that a target slice is the network slice 3 (denoted as Intended Slice=S3). Specific steps are as follows.

Step 1: The terminal device determines a target network slice group corresponding to a target network slice.

A NAS of the terminal device determines that the target network slice is S3, and it is known that a correspondence between a target network slice group and associated NSSAI is valid in a current RA. In this case, a corresponding target network slice group, that is, SG1, SG2, and SG4, is found based on S-NSSAI of S3 by using the correspondence.

Step 2: The terminal device determines priority information of the target network slice group based on first information.

Specifically, the terminal device determines a priority of the target network slice group based on the first information (including a priority corresponding to each network slice associated with the target network slice group) in step 2.

In step 2, an implementation form of the priority information may be a specific value assigned to a priority corresponding to each target network slice group, or may be a target network slice group list obtained through sorting according to a specific rule.

Optionally, in the implementation example 4, that the information included in the first information sequentially participates in a determining process of "determining the priority information" includes the following implementation.
(1) In step 2, the terminal device may perform filtering based on a quantity of target network slices included in each network slice group in the target network slice group, to determine the priority information. Quantities of target network slices (that is, S3) included in SG1, SG2, and SG4 are all 1, denoted as Intended Slice Group ID(s)=SG1, SG2, SG4.

Optionally, the foregoing process may further include two implementations.

Manner 1: The NAS of the terminal device learns, based on the target network slice, that is, S3, by using the correspondence, that the target network slice group is the network slice group 1, the network slice group 2, and the network slice group 4 (denoted as Intended Slice Group ID(s)=SG1, SG2, SG4).

Manner 2: The NAS of the terminal device forwards S-NSSAI of the target network slice, that is, S3, and the correspondence to an AS, and then the AS learns, based on the NSSAI of S3 by using the correspondence, that the target network slice group is the network slice group 1, the network slice group 2, and the network slice group 4 (denoted as Intended Slice Group ID(s)=SG1, SG2, SG4).

(2) In step 2, the terminal device may determine the priority information based on priority information of a network slice included in the target network slice group.

Specifically, the terminal device sets a priority of each network slice group in the target network slice group based on a priority corresponding to a network slice with a highest priority associated with the network slice group. A higher priority corresponding to the network slice with the highest priority associated with the target network slice group corresponds to a higher priority of the target network slice group. If network slices with the highest priority correspond to a same priority, a network slice with a highest priority continues to be found in remaining slices, and so on, until the priority of the target network slice group is differentiated. If a network slice associated with a group SGx has been traversed and another group SGy is still being traversed, it is considered by default that P(SGx)<P(SGy) (that is, a priority corresponding to the network slice associated with SGx is a subset of that of SGy). In this embodiment, priorities corresponding to network slices with a highest priority in network slices associated with SG1, SG2, and SG4 are respectively P(S4), P(S5), and P(S4). It can be learned from P(S4)<P(S5) that a priority corresponding to SG2 is the highest. In addition, because network slices with a highest priority that are associated with SG1 and SG4 are the same, and SG4 is first traversed, finally, the priority of the target network slice group may be represented as list={SG2, SG1, SG4} in descending order.

Optionally, the foregoing process may further include two implementations.

Manner 1: ANAS of the terminal device obtains the priority of the target network slice group based on an identifier of the target network slice group, and a priority corresponding to each network slice associated with the target network slice group.

Manner 2: A NAS of the terminal device forwards an identifier of the target network slice group, and a priority corresponding to each network slice associated with the target network slice group to an AS, and then the AS obtains the priority of the target network slice group based on the foregoing information.

Step 3: The terminal device performs cell reselection based on the priority information obtained in step 2.

Optionally, in step 3, the terminal device performs cell reselection based on a frequency priority corresponding to a target network slice group with a highest priority. For example, it can be learned from step 2 that the target network slice group with the highest priority is SG2, and cell reselection of the terminal device is performed based on a broadcast frequency (reselection) priority corresponding to SG2.

Implementation example 5: is an implementation example of Implementation 2.

In the implementation example 5, it is assumed that the terminal device determines that target network slices are the network slice 1, the network slice 2, and the network slice 4 (denoted as Intended Slice=S1, S2, S4). Specific steps are as follows.

Step 1: The terminal device determines a target network slice group corresponding to a target network slice.

ANAS of the terminal device determines that the target network slices are S1, S2, and S4, and it is known that a correspondence between a target network slice group and associated NSSAI is valid in a current RA. In this case, a corresponding target network slice group, that is, SG1, SG2, SG3, and SG4, is found based on S-NSSAI of S1, S2, and S4 by using the correspondence.

Step 2: The terminal device determines priority information of the target network slice group based on first information.

Specifically, the terminal device determines a priority of the target network slice group based on the first information (including a priority corresponding to each network slice associated with the target network slice group) in step 2.

In step 2, an implementation form of the priority information may be a specific value assigned to a priority corresponding to each target network slice group, or may be a target network slice group list obtained through sorting according to a specific rule.

Optionally, in the implementation example 5, that the information included in the first information sequentially participates in a determining process of "determining the priority information" includes the following implementation.
(1) In step 2, the terminal device may perform filtering based on a quantity of target network slices included in each network slice group in the target network slice group, to determine the priority information. Quantities of target network slices (that is, S1, S2, and S4) included in SG1, SG2, SG3, and SG4 are (2, 2, 2, 1), that is, Intended Slice Group ID(s)=SG1, SG2, SG3.

Optionally, the foregoing process may further include two implementations.

Manner 1: The NAS of the terminal device learns, based on the target network slices, that is, S1, S2, and S4, by using the correspondence, that the target network slice group is the network slice group 1, the network slice group 2, and the network slice group 3 (denoted as Intended Slice Group ID(s)=SG1, SG2, SG3).

Manner 2: The NAS of the terminal device forwards S-NSSAI of the target network slices, that is, S1, S2, and S4, and the correspondence to an AS, and then the AS learns, based on the S-NSSAI of S1, S2, and S4 by using the correspondence, that Intended Slice Group ID(s)=SG1, SG2, SG3.

(2) In step 2, the terminal device may determine the priority information based on priority information of a network slice included in the target network slice group.

Specifically, the terminal device sets a priority of each network slice group in the target network slice group based on a priority corresponding to a network slice with a highest priority associated with the network slice group. A higher priority corresponding to the network slice with the highest priority associated with the target network slice group corresponds to a higher priority of the target network slice group. If network slices with the highest priority correspond to a same priority, a network slice with a highest priority continues to be found in remaining network slices, and so on, until the priority of the target network slice group is differentiated. If a network slice associated with a group SGx has been traversed and another group SGy is still being traversed, it is considered by default that P(SGx)<P(SGy) (that is, a priority corresponding to the network slice associated with SGx is a subset of that of SGy). In this embodiment, priorities corresponding to network slices with a highest priority in network slices associated with SG1, SG2, and SG3 are respectively P(S4), P(S5), and P(S5). It can be learned from P(S4)<P(S5) that a priority corresponding to SG1 is the lowest. In addition, network slices corresponding to a highest priority in remaining network slices associated with SG2 and SG4 are respectively S4 and S2. Because P(S2)<P(S4), finally, the priority of the target network slice group may be represented as list= { SG2, SG3, SG1} in descending order.

Optionally, the foregoing process may further include two implementations.

Manner 1: ANAS of the terminal device obtains the priority of the target network slice group based on an identifier of the target network slice group, and a priority corresponding to each network slice associated with the target network slice group.

Manner 2: A NAS of the terminal device forwards an identifier of the target network slice group, and a priority corresponding to each network slice associated with the target network slice group to an AS, and then the AS obtains the priority of the target network slice group based on the foregoing information.

Step 3: The terminal device performs cell reselection based on the priority information obtained in step 2.

Optionally, in step 3, the terminal device performs cell reselection based on a frequency priority corresponding to a target network slice group with a highest priority. For example, it can be learned from step 2 that the target network slice group with the highest priority is SG2, and cell reselection of the terminal device is performed based on a broadcast frequency (reselection) priority corresponding to SG2.

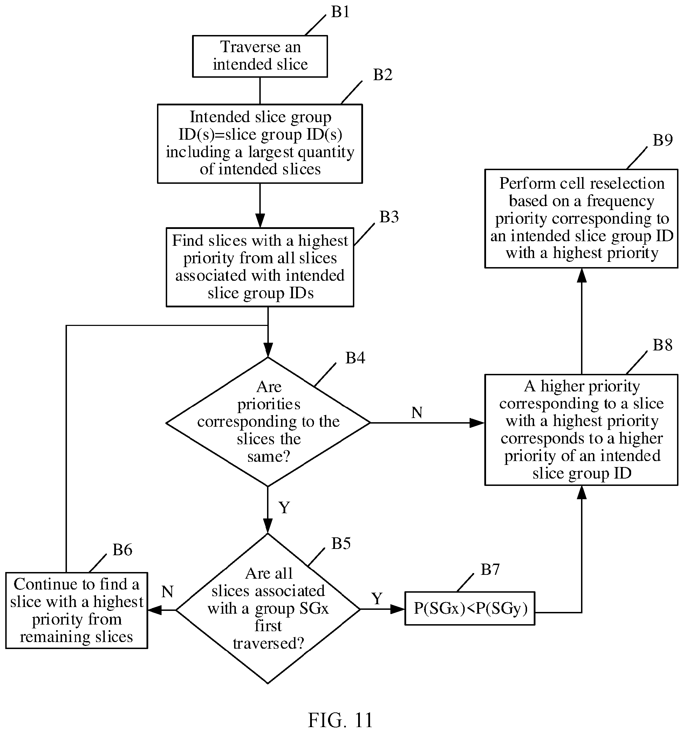

In a possible implementation of the implementation example 4 and the implementation example 5, any one of the implementation example 4 and the implementation example 5 may be implemented by using a process shown in FIG. 11. The process shown in FIG. 11 specifically includes the following steps.
B1: The terminal device traverses an intended slice.
B2: The terminal device determines that intended slice group ID(s)=slice group(s) including a largest quantity of intended slices, and performs step B3.
B3: The terminal device finds slices with a highest priority from slices associated with intended slice group IDs, and performs step B4.
B4: The terminal device determines whether priorities corresponding to the slices are the same. If the priorities are the same, step B5 is performed; or if the priorities are not the same, step B8 is performed.
B5: When determining, in step B4, that the priorities corresponding to the slices are the same, the terminal device determines whether a slice associated with a group SGx is first traversed. If the slice associated with the group SGx is first traversed, step B7 is performed; or if the slice associated with the group SGx is not first traversed, step B6 is performed.
B6: When determining, in step B5, that the slice associated with the group SGx is not first traversed, the terminal device continues to find a slice with a highest priority from remaining slices in step B6, and performs step B4.
B7: When the terminal device determines, in step B5, that the slice associated with the group SGx is first traversed, the terminal device determines that P(SGx)<P(SGy), and performs step B8.
B8: The terminal device determines that a higher priority corresponding to a slice with a highest priority corresponds to a higher priority of an intended slice group ID.
B9: The terminal device performs cell reselection based on a frequency priority corresponding to an intended slice group ID with a highest priority.

Optionally, before step B9, the terminal device may receive, from the network device, "indication information indicating to perform cell reselection based on the frequency priority corresponding to the first cell frequency after cell reselection performed based on the target cell frequency fails". In this case, in an implementation process of step B9, if the terminal device fails to perform cell reselection based on the frequency priority corresponding to the intended slice group ID with the highest priority, the terminal device further needs to perform cell reselection at the first cell frequency based on the indication information. For a plurality of implementations of the "indication information" and the "first cell frequency", refer to the foregoing descriptions. Details are not described herein again.

Optionally, when the terminal device determines, in step B9, that a correspondence between a network slice and a network slice group (for an implementation process of the correspondence, refer to the foregoing description in FIG. 2, and details are not described herein again) is invalid (or is not applicable, is not adapted, or the like) in a first area in which the terminal device is currently located, the terminal device determines that cell reselection cannot be performed based on a frequency priority corresponding to the intended slice group ID with the highest priority determined in step B8. Then, the terminal device may perform cell reselection based on a frequency priority corresponding to a default network slice group including one or more default network slices, to improve a cell reselection success rate.

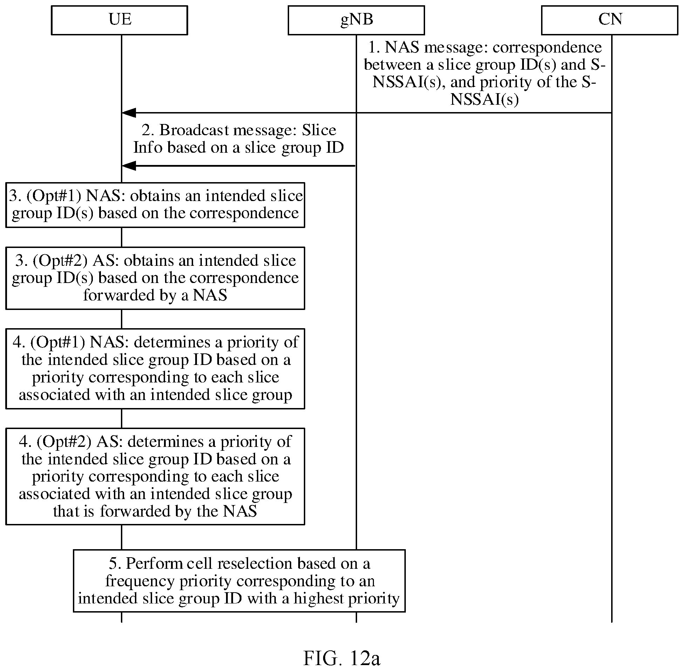

In an implementation example, the implementation processes of the foregoing implementation example 4 and implementation example 5 may alternatively be implemented by using a process shown in FIG. 12a. As shown in FIG. 12a, the process includes the following steps.

It should be noted that in the implementation example shown in FIG. 12a, an example in which the terminal device is denoted as UE and network devices include an access network device denoted as a gNB and a core network device denoted as a CN is used for description.
1. The CN sends a NAS message to the UE through the gNB. The NAS message includes a correspondence between a slice group ID(s) and S-NSSAI(s), and a priority of the S-NSSAI(s).
2. The gNB sends a broadcast message to the UE. The broadcast message includes network slice information (Slice Info) based on a slice group ID. For example, the Slice Info includes cell frequency information.
3. In an optional implementation 1 (Opt#1), a NAS of the UE obtains an intended slice group ID(s) based on the correspondence.
3. In an optional implementation 2 (Opt#2), an AS of the UE obtains an intended slice group ID(s) based on the correspondence forwarded by a NAS.
4. In an optional implementation 1 (Opt#1), the NAS of the UE determines a priority of the intended slice group ID based on a priority corresponding to each slice associated with the intended slice group ID(s).
4. In an optional implementation 2 (Opt#2), the AS of the UE determines a priority of the intended slice group ID based on a priority corresponding to each slice associated with the intended slice group ID(s) that is forwarded by the NAS.
5. The UE and the gNB perform cell reselection based on a frequency priority corresponding to an intended slice group ID with a highest priority.

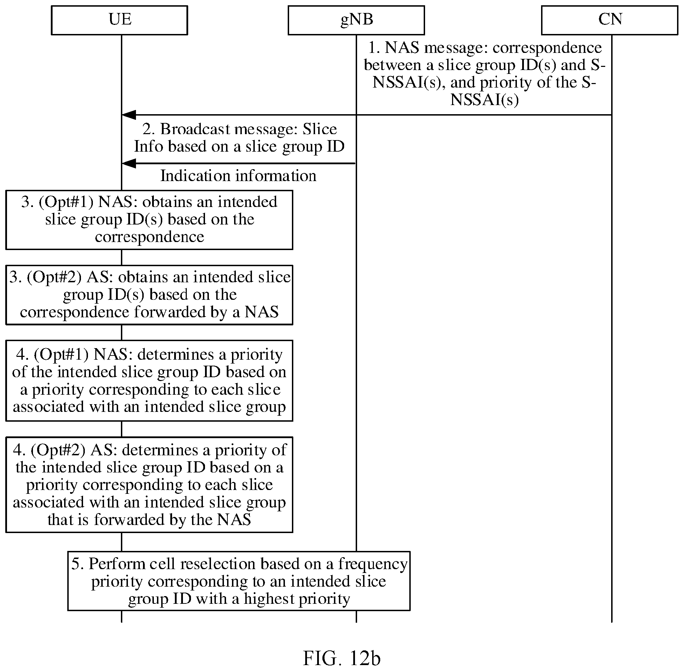

Optionally, the process shown in FIG. 12a may alternatively be implemented by using a process shown in FIG. 12b. A difference between the two processes lies in an implementation of step 2, and other steps are the same. In step 2 in FIG. 12b, the broadcast message may further include "indication information indicating to perform cell reselection based on the frequency priority corresponding to the first cell frequency after cell reselection performed based on the target cell frequency fails". For a plurality of implementations of the "indication information" and the "first cell frequency", refer to the foregoing descriptions. Details are not described herein again. Therefore, in step 5 shown in FIG. 12b, when the terminal device fails to perform cell reselection based on the frequency priority corresponding to the intended slice group ID with the highest priority, the terminal device may perform cell reselection based on the first cell frequency indicated by the indication information, to improve a cell reselection success rate of the terminal device.

It should be understood that, in FIG. 12b, an example in which the "indication information" is carried in the broadcast message in step 2 is used for description. In actual application, the "indication information" may alternatively be carried in another message, for example, an RRC message, a MAC CE message, or a DCI message, or may be another message. This is not limited herein.

Therefore, based on the implementation solutions of the implementation example 4 and the implementation example 5, system overheads can be reduced, transmission security can be ensured, and a priority of a slice group ID is determined to adapt to a solution of performing cell reselection based on a granularity of a network slice group and a service scenario triggered by MO.

Implementation example 6: is an implementation example of Implementation 3.

In the implementation example 6, it is assumed that the terminal device determines that target network slices are the network slice 1, the network slice 2, and the network slice 4 (denoted as Intended Slice=S1, S2, S4). Specific steps are as follows.

Step 1: The terminal device determines a target network slice group corresponding to a target network slice.

ANAS of the terminal device determines that the target network slices are S1, S2, and S4, and it is known that a correspondence between a target network slice group and associated NSSAI is valid in a current PLMN. In this case, a corresponding target network slice group is found based on S-NSSAI of S1, S2, and S4 by using the correspondence. In other words, the terminal device determines that target network slice groups are the network slice group 1, the network slice group 2, the network slice group 3, and the network slice group 4 (that is, SG1, SG2, SG3, and SG4).

Step 2: Determine priority information of the target network slice group based on information that is about a historically used network slice and that is stored by the terminal device in the NAS.

Optionally, after step 1, the terminal device may perform filtering in step 2 based on a quantity of target network slices included in each network slice group in the target network slice group. Quantities of target network slices (that is, S1, S2, and S4) included in SG1, SG2, SG3, and SG4 are (2, 2, 2, 1). Therefore, the terminal device needs to exclude some options (that is, exclude SG4) when determining the target network slice group. To be specific, the terminal device determines that the target network slice group after filtering is the network slice group 1, the network slice group 2, and the network slice group 3 (that is, SG1, SG2, and SG3).

Optionally, a process in which the terminal device determines that the target network slice group is the network slice group 1, the network slice group 2, and the network slice group 3 may include the following two implementations.

Manner 1: The NAS of the terminal device learns, based on the target network slices, that is, S1, S2, and S4, by using the correspondence, that the target network slice group is the network slice group 1, the network slice group 2, and the network slice group 3 (denoted as Intended Slice Group ID(s)=SG1, SG2, SG3).

Manner 2: The NAS of the terminal device forwards S-NSSAI of the target network slices, that is, S1, S2, and S4, and the correspondence to an AS, and then the AS learns, based on the S-NSSAI of S1, S2, and S4 by using the correspondence, that the target network slice group is the network slice group 1, the network slice group 2, and the network slice group 3 (denoted as Intended Slice Group ID(s)=SG1, SG2, SG3).

It can be learned from the foregoing process that Intended Slice Group ID(s)=SG1, SG2, SG3. In this embodiment, the priority of the target network slice group may be obtained from the information that is about the historically used network slice and that is stored by the terminal device in the NAS (for example, the information about the historically used network slice is a quantity of used times, or denoted as a quantity of indexed times). For example, a target network slice group with a larger quantity of indexed times has a higher priority. If quantities of indexed times are the same, priorities are further differentiated according to the method in the implementation example 1 or 2. A priority form of the target network slice group may be a specific value assigned to a priority corresponding to each target network slice group, or may be a target network slice group list obtained through sorting according to a specific rule.

In this embodiment, if it is known from the precondition that quantities of times that target network slice groups are indexed in the NAS meet N(SG4)<N(SG2)<N(SG3)<N(SG1), it may be learned that the priorities of the target network slice groups may be represented as list={SG1, SG3, SG2} in descending order.

Optionally, the foregoing process may further include two implementations.

Manner 1: The NAS of the terminal device directly obtains the priority of the target network slice group based on historical information stored in the NAS.

Manner 2: The NAS of the terminal device forwards, to the AS, historical information stored in the NAS, and then the AS obtains the priority of the target network slice group based on the foregoing information.

Step 3: The terminal device performs cell reselection based on the priority information obtained in step 2.

Optionally, in step 3, the terminal device performs cell reselection based on a frequency priority corresponding to a target network slice group with a highest priority. Optionally, it can be learned from step 2 that the target network slice group with the highest priority is SG1, and cell reselection of the terminal device is performed based on a broadcast frequency (reselection) priority corresponding to SG1.

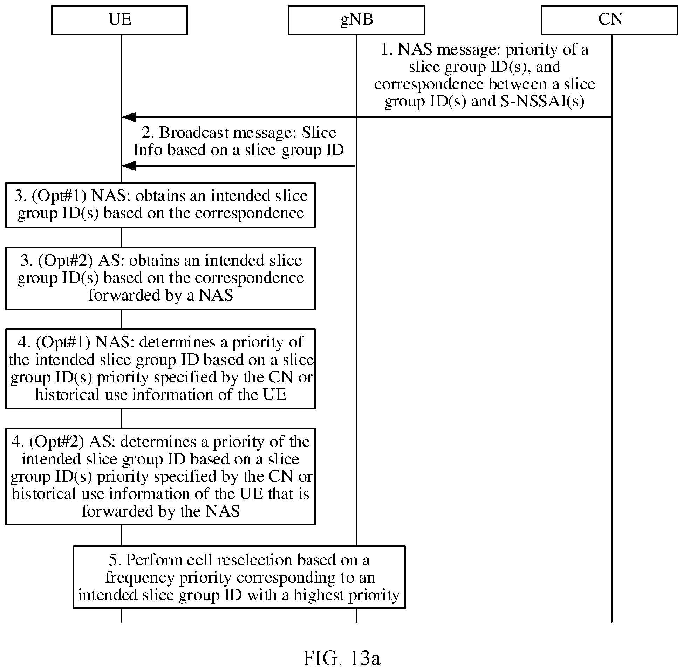

In an implementation example, the implementation processes of the foregoing implementation example 1 and implementation example 6 may alternatively be implemented by using a process shown in FIG. 13a. As shown in FIG. 13a, the process includes the following steps.

It should be noted that in the implementation example shown in FIG. 13a, an example in which the terminal device is denoted as UE and network devices include an access network device denoted as a gNB and a core network device denoted as a CN is used for description.
1. The CN sends a NAS message to the UE through the gNB. The NAS message includes a correspondence between a slice group ID(s) and S-NSSAI(s), and a priority of the S-NSSAI(s).
2. The gNB sends a broadcast message to the UE. The broadcast message includes network slice information (Slice Info) based on a slice group ID. For example, the Slice Info includes cell frequency information.
3. In an optional implementation 1 (Opt#1), a NAS of the UE obtains an intended slice group ID(s) based on the correspondence.
3. In an optional implementation 2 (Opt#2), an AS of the UE obtains an intended slice group ID(s) based on the correspondence forwarded by a NAS.
4. In an optional implementation 1 (Opt#1), the NAS of the UE determines a priority of the intended slice group ID based on a slice group ID(s) priority specified by the CN or historical information of the UE.
4. In an optional implementation 2 (Opt#2), the AS of the UE determines a priority of the intended slice group ID based on a slice group ID(s) priority specified by the CN or historical information of the UE that is forwarded by the NAS.
5. The UE and the gNB perform cell reselection based on a frequency priority corresponding to an intended slice group ID with a highest priority.

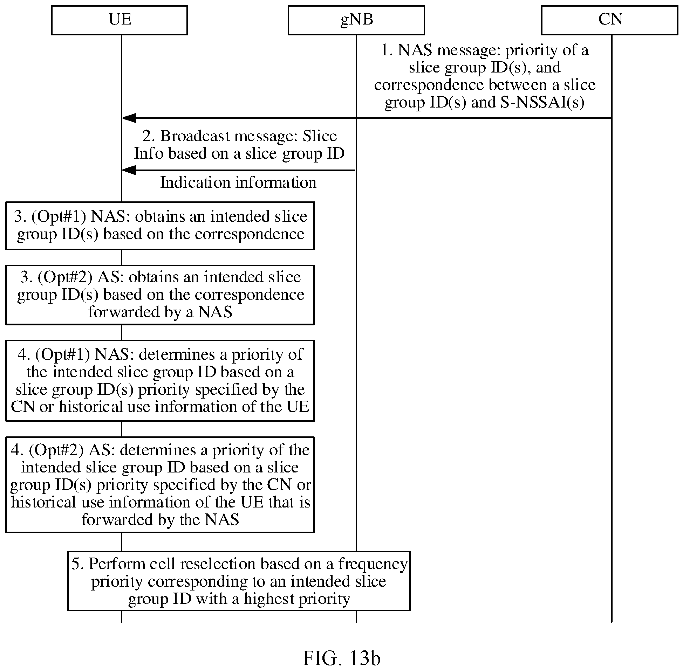

Optionally, the process shown in FIG. 13a may alternatively be implemented by using a process shown in FIG. 13b. A difference between the two processes lies in an implementation of step 2, and other steps are the same. In step 2 in FIG. 13b, the broadcast message may further include "indication information indicating to perform cell reselection based on the frequency priority corresponding to the first cell frequency after cell reselection performed based on the target cell frequency fails". For a plurality of implementations of the "indication information" and the "first cell frequency", refer to the foregoing descriptions. Details are not described herein again. Therefore, in step 5 shown in FIG. 13b, when the terminal device fails to perform cell reselection based on the frequency priority corresponding to the intended slice group ID with the highest priority, the terminal device may perform cell reselection based on the first cell frequency indicated by the indication information, to improve a cell reselection success rate of the terminal device.

It should be understood that, in FIG. 13b, an example in which the "indication information" is carried in the broadcast message in step 2 is used for description. In actual application, the "indication information" may alternatively be carried in another message, for example, an RRC message, a MAC CE message, or a DCI message, or may be another message. This is not limited herein.

Therefore, based on the implementation solutions of the implementation example 1 and the implementation example 6, system overheads can be reduced, transmission security can be ensured, and a priority of a slice group ID is determined to adapt to a solution of performing cell reselection based on a granularity of a network slice group and a service scenario triggered by MO.

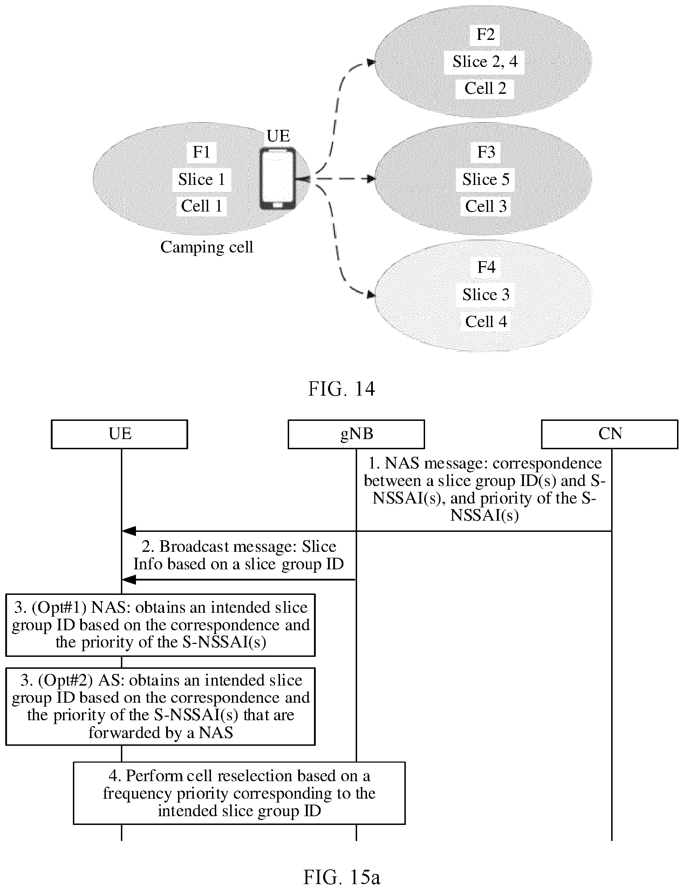

With reference to a communication scenario shown in FIG. 14, the following describes an implementation process (corresponding to the example shown in FIG. 7) of Implementation 2.

For example, in FIG. 14, a cell 1 is a camping cell (Camping Cell) of a terminal device (denoted as UE), and a cell 2, a cell 3, and a cell 4 are candidate cells of the UE.

For the cell 1, a supported access frequency is denoted as F1, and a supported network slice includes the network slice 1 (Slice 1).

For the cell 2, a supported access frequency is denoted as F2, and supported network slices include the network slice 2 and the network slice 4 (Slice 2, 4).

For the cell 3, a supported access frequency is denoted as F3, and a supported network slice includes the network slice 5 (Slice 5).

For the cell 4, a supported access frequency is denoted as F4, and a supported network slice includes the network slice 3 (Slice 3).

In the scenario shown in FIG. 14, different network slice groups and a plurality of network slices are determined based on actual cell deployment (each network slice corresponds to only a specific network slice group, in other words, different network slice groups include different network slices). An example is as follows.

A network slice group 1 corresponds to the network slice 1, and this is denoted as SG1={S1}.

A network slice group 2 corresponds to the network slice 2 and the network slice 4, and this is denoted as SG2={ S2, S4}.

A network slice group 3 corresponds to the network slice 5, and this is denoted as SG3={S5}.

A network slice group 4 corresponds to the network slice 3, and this is denoted as SG4={S3}.

The foregoing four cells are located in a same RA (or TA or PLMN area). In other words, the correspondence based on the foregoing grouping is valid in all the four cells.

In addition, it is further assumed that an ascending order of network slice priorities meets:
the network slice 1, the network slice 2, the network slice 3, the network slice 4, and the network slice 5, denoted as P(S1)<P(S3)<P(S5)<P(S4)<P(S2).

It should be noted that step 1 in the following implementation example 7 is an implementation example of step S201 in the embodiment in FIG. 2, and step 2 in the following implementation example 7 is an implementation example of step S202 in the embodiment in FIG. 2.

Implementation example 7: is an implementation example of Implementation 2 (that is, the foregoing implementation process shown in FIG. 7).

In the implementation example 7, it is assumed that the terminal device determines that target network slices are the network slice 1, the network slice 3, and the network slice 4 (denoted as Intended Slice=S1, S3, S4). Specific steps are as follows.

Step 1: The terminal device determines a target network slice group corresponding to a target network slice with a highest priority.

ANAS of the terminal device determines that target network slices are S1, S3, and S4, and it is known that a correspondence between a target network slice group and associated NSSAI is valid in a current PLMN and there is a one-to-one correspondence. Because a priority sequence of the target network slices meets P(S 1)<P(S3)<P(S4), a corresponding target network slice group is found based on S-NSSAI of S4 by using the correspondence, that is, Intended Slice Group ID=SG2.

Optionally, the foregoing process may further include two implementations.

Manner 1: The NAS of the terminal device learns, by using the correspondence based on the target network slices, that is, S1, S3, and S4, and priorities corresponding to the target network slices, that the target network slice group is a network slice group 2 (denoted as Intended Slice Group ID(s)=SG2).

Manner 2: The NAS of the terminal device forwards, to the AS, S-NSSAI of the target network slices, that is, S1, S3, and S4, the correspondence, and priorities corresponding to the target network slices, and then the AS learns, based on the foregoing information, that the target network slice group is a network slice group 2 (denoted as Intended Slice Group ID(s)=SG2).

Step 2: The terminal device performs cell reselection based on the target network slice group determined in step 1.

Optionally, in step 2, the terminal device performs cell reselection based on a frequency priority corresponding to the foregoing target network slice group.

Optionally, it can be learned from step 1 that the target network slice group is SG2, and cell reselection of the terminal device is performed based on a broadcast frequency (reselection) priority corresponding to SG2.

In an implementation example, the implementation process of the foregoing implementation example 7 may alternatively be implemented by using a process shown in FIG. 15a. As shown in FIG. 15a, the process includes the following steps.

It should be noted that in the implementation example shown in FIG. 15a, an example in which the terminal device is denoted as UE and network devices include an access network device denoted as a gNB and a core network device denoted as a CN is used for description.
1. The CN sends a NAS message to the UE through the gNB. The NAS message includes a correspondence between a slice group ID(s) and S-NSSAI(s), and a priority of the S-NSSAI(s).
2. The gNB sends a broadcast message to the UE. The broadcast message includes network slice information (Slice Info) based on a slice group ID. For example, the Slice Info includes cell frequency information.
3. In an optional implementation 1 (Opt#1), a NAS of the UE obtains an intended slice group ID(s) based on the correspondence and the priority of the S-NSSAI(s).
3. In an optional implementation 2 (Opt#2), an AS of the UE obtains an intended slice group ID(s) based on the correspondence and the priority of the S-NSSAI(s) that are forwarded by a NAS.
4. The UE and the gNB perform cell reselection based on a frequency priority corresponding to an intended slice group ID with a highest priority.

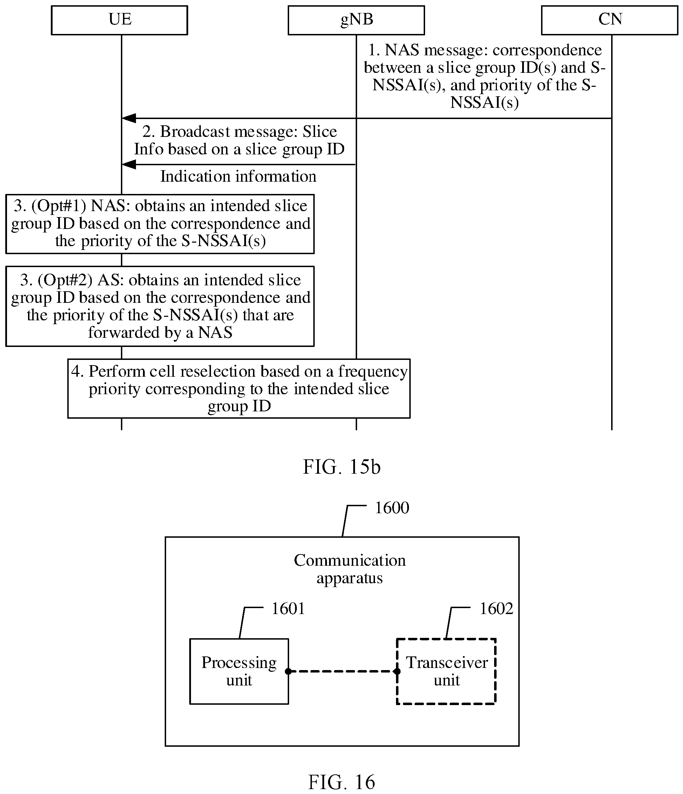

Optionally, the process shown in FIG. 15a may alternatively be implemented by using a process shown in FIG. 15b. A difference between the two processes lies in an implementation of step 2, and other steps are the same. In step 2 in FIG. 15b, the broadcast message may further include "indication information indicating to perform cell reselection based on the frequency priority corresponding to the first cell frequency after cell reselection performed based on the target cell frequency fails". For a plurality of implementations of the "indication information" and the "first cell frequency", refer to the foregoing descriptions. Details are not described herein again. Therefore, in step 4 shown in FIG. 15b, when the terminal device fails to perform cell reselection based on the frequency priority corresponding to the intended slice group ID with the highest priority, the terminal device may perform cell reselection based on the first cell frequency indicated by the indication information, to improve a cell reselection success rate of the terminal device.

It should be understood that, in FIG. 15b, an example in which the "indication information" is carried in the broadcast message in step 2 is used for description. In actual application, the "indication information" may alternatively be carried in another message, for example, an RRC message, a MAC CE message, or a DCI message, or may be another message. This is not limited herein.

Therefore, based on the implementation solution of the implementation example 7, system overheads can be reduced, transmission security can be ensured, and a priority of a slice group ID is determined to adapt to a solution of performing cell reselection based on a granularity of a network slice group and a service scenario triggered by MO. In addition, if the correspondence is valid in a current specific area and there is a one-to-one correspondence, a corresponding slice group ID is found based on S-NSSAI corresponding to an intended slice with a highest priority by using the correspondence, and a priority of the intended slice group ID(s) does not need to be further determined. The slice group ID is the intended slice group ID.

The foregoing describes this application from a perspective of a method, and the following describes an apparatus in this application.

FIG. 16 is a schematic implementation diagram of a communication apparatus according to an embodiment of this application. The communication apparatus may specifically perform an implementation process related to the terminal device in any one of the foregoing embodiments.

In an implementation, the communication apparatus 1600 is configured to perform the cell reselection method related to the terminal device, and the communication apparatus 1600 includes at least a processing unit 1601.

The processing unit 1601 is configured to determine priority information of a target network slice group, where the priority information indicates a priority of the target network slice group.

The processing unit 1601 is configured to perform cell reselection based on a cell frequency that is associated with the target network slice group and determined based on the priority information.

In an implementation, the communication apparatus 1600 is configured to perform the cell reselection method related to the terminal device, and the communication apparatus 1600 includes at least a processing unit 1601.

The processing unit 1601 is configured to determine a cell frequency associated with a target network slice group.

The processing unit 1601 is configured to perform cell reselection based on the cell frequency associated with the target network slice group.

In a possible implementation, the target network slice group includes a network slice that the terminal device expects to access.

In a possible implementation, the network slice that the terminal device expects to access includes at least one of the following: a network slice indicated by an allowed NSSAI information element, a network slice indicated by a requested NSSAI information element, a network slice indicated by a suspended NSSAI information element, or a network slice related to a mobile originated traffic service.

In a possible implementation, the target network slice group includes a default network slice.

In a possible implementation, the target network slice group is determined based on a correspondence between a network slice and a network slice group, and when the correspondence between a network slice and a network slice group is invalid in a first area in which the terminal device is currently located, the target network slice group includes a default network slice. The first area includes a registration area (registration area, RA), a tracking area (tracking area, TA), or a public land mobile network (public land mobile network, PLMN) area.

In a possible implementation, the apparatus further includes a transceiver unit 1602, and that the processing unit 1601 is configured to determine priority information of a target network slice group includes:
the processing unit 1601 is configured to receive the priority information from a network device through the transceiver unit 1602.

In a possible implementation, that the processing unit 1601 is configured to determine priority information of a target network slice group includes:
the processing unit 1601 is configured to determine the priority information based on information about a historically used network slice.

In a possible implementation, the priority information is determined based on a quantity and/or priority information of network slices included in each network slice group in the target network slice group.

In a possible implementation, that the processing unit 1601 is configured to perform cell reselection based on a cell frequency that is associated with the target network slice group and determined based on the priority information includes:
the processing unit 1601 is configured to perform cell reselection based on a target cell frequency determined based on the priority information, where the target cell frequency is one or more cell frequencies associated with a network slice group with a highest priority in the target network slice group.

In a possible implementation, the transceiver unit 1602 is further configured to receive indication information, where the indication information indicates to perform cell reselection based on a frequency priority corresponding to a first cell frequency after cell reselection performed based on the target cell frequency fails, and the first cell frequency includes at least one of the following:
a cell frequency associated with one or more network slices included in a network slice set, where the network slice set includes the network slice that the terminal device expects to access;
a cell frequency that is not associated with a network slice;
a cell frequency associated with one or more network slice groups included in a network slice group set, where the network slice group set includes a network slice group corresponding to the network slice that the terminal device expects to access;
a cell frequency that is not associated with a network slice group; or
one or more cell frequencies that are indicated by the priority information and associated with a network slice group other than the network slice group with the highest priority in the target network slice group.

In a possible implementation, the indication information includes at least one of the following: a quantity of times of performing cell reselection based on the first cell frequency, duration of performing cell reselection based on the first cell frequency, a start moment of performing cell reselection based on the first cell frequency, or an end moment of performing cell reselection based on the first cell frequency.

In an implementation, the communication apparatus 1600 is configured to perform the communication method related to the foregoing network device, and the communication apparatus 1600 includes a processing unit 1601 and a transceiver unit 1602.

The processing unit 1601 is configured to determine priority information of a target network slice group, where the priority information indicates a priority of the target network slice group.

The transceiver unit 1602 is configured to send the priority information.

In a possible implementation, the transceiver unit 1602 is further configured to send indication information, where the indication information indicates to perform cell reselection based on a frequency priority corresponding to a first cell frequency after cell reselection performed based on the target cell frequency fails, and the first cell frequency includes at least one of the following:
a cell frequency associated with one or more network slices included in a network slice set, where the network slice set includes the network slice that the terminal device expects to access;
a cell frequency that is not associated with a network slice;
a cell frequency associated with one or more network slice groups included in a network slice group set, where the network slice group set includes a network slice group corresponding to the network slice that the terminal device expects to access;
a cell frequency that is not associated with a network slice group; or
one or more cell frequencies that are indicated by the priority information and associated with a network slice group other than the network slice group with the highest priority in the target network slice group.

In a possible implementation, the indication information includes at least one of the following: a quantity of times of performing cell reselection based on the first cell frequency, duration of performing cell reselection based on the first cell frequency, a start moment of performing cell reselection based on the first cell frequency, or an end moment of performing cell reselection based on the first cell frequency.

It should be noted that, for content such as an information execution process of the units in the communication apparatus 1600, refer to the descriptions in the foregoing method embodiments of this application. Details are not described herein again.

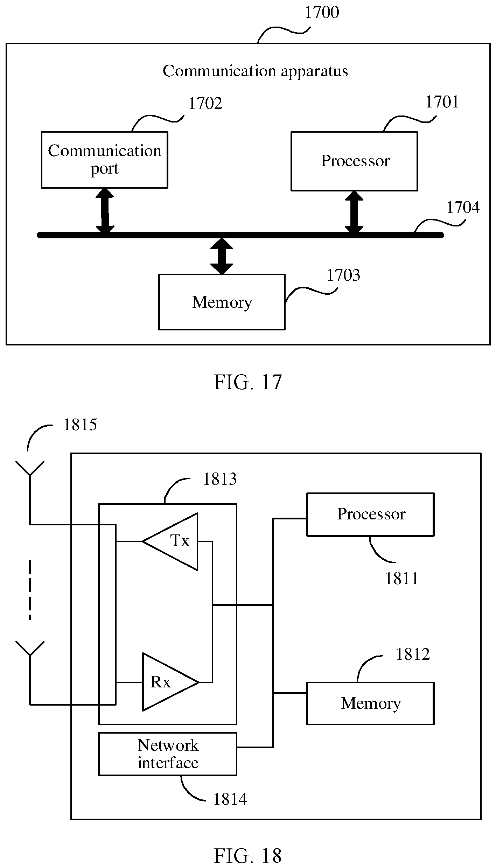

FIG. 17 shows a communication apparatus in the foregoing embodiments according to an embodiment of this application. The communication apparatus 1700 may be the terminal device shown in any one of the foregoing embodiments, or the communication apparatus 1700 may be some components (such as a processor, a chip, or a chip system) in the terminal device shown in any one of the foregoing embodiments.

FIG. 17 is a schematic diagram of a possible logical structure of the communication apparatus 1700. The communication apparatus 1700 may include but is not limited to at least one processor 1701 and a communication port 1702. Further, optionally, the apparatus may further include a memory 1703 and a bus 1704. In this embodiment of this application, the at least one processor 1701 is configured to perform control processing on an action of the communication apparatus 1700.

For example, the communication apparatus 1700 may be configured to perform the method described in any one of the embodiments shown in FIG. 2 to FIG. 15b. FIG. 2 is used as an example. The communication apparatus 1700 may determine priority information of a target network slice group in step S201, and the communication apparatus 1700 may further perform cell reselection based on a cell frequency that is associated with the target network slice group and determined based on the priority information in step S202.

In addition, the processor 1701 may be a central processing unit, a general-purpose processor, a digital signal processor, an application-specific integrated circuit, a field programmable gate array or another programmable logic device, a transistor logic device, a hardware component, or any combination thereof. The processor may implement or execute logical blocks, modules, and circuits in various examples described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing described system, apparatus, and unit, refer to a corresponding process in the foregoing method embodiment. Details are not described herein again.

It should be noted that the communication apparatus 1700 shown in FIG. 17 may be specifically configured to implement other steps implemented by the terminal device in the foregoing corresponding method embodiments, and implement technical effects corresponding to the terminal device. For a specific implementation of the communication apparatus 1700 shown in FIG. 17, refer to the descriptions in the foregoing method embodiments. Details are not described herein again.

FIG. 18 is a schematic diagram of a structure of a network device or some components (for example, a processor, a chip, or a chip system) of a network device in the foregoing embodiments according to an embodiment of this application. In the following, an example in which the example diagram of the structure shown in FIG. 18 is a schematic diagram of a structure of a network device is used for description.

For example, the network device may include an access network device or a core network device.

For example, the schematic diagram of the structure of the network device shown in FIG. 18 may be used to perform the method described in any one of the embodiments shown in FIG. 2 to FIG. 15b. FIG. 4 is used as an example. The network device may send first indication information to a terminal device in step S401.

As shown in FIG. 18, the network device includes at least one processor 1811. Optionally, the network device may further include a target network interface 1814.

Further, optionally, the network device further includes a target memory 1812, a target transceiver 1813, and one or more antennas 1815. The processor 1811, the memory 1812, the transceiver 1813, and the network interface 1814 are connected, for example, by using a bus. In this embodiment of this application, the connection may include various interfaces, transmission lines, buses, or the like. This is not limited in this embodiment. The antenna 1815 is connected to the transceiver 1813. The network interface 1814 is configured to enable the network device to communicate with another communication device by using a communication link. For example, the network interface 1814 may include a network interface between the network device and a core network device, for example, an S1 interface. The network interface may include a network interface between the network device and another network device (for example, another network device or core network device), for example, an X2 or Xn interface.

The processor 1811 is mainly configured to: process a communication protocol and communication data, control the entire network device, execute a software program, and process data of the software program, for example, configured to support the network device in performing an action described in the embodiments. The network device may include a baseband processor and a central processing unit. The baseband processor is mainly configured to process the communication protocol and the communication data. The central processing unit is mainly configured to control the entire terminal device, execute the software program, and process the data of the software program. The processor 1811 in FIG. 18 may integrate functions of the baseband processor and the central processing unit. A person skilled in the art may understand that the baseband processor and the central processing unit may alternatively be independent processors, and are interconnected by using a technology such as a bus. A person skilled in the art may understand that the terminal device may include a plurality of baseband processors to adapt to different network standards, the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 1812 may exist independently, and is connected to the processor 1811. Optionally, the memory 1812 and the processor 1811 may be integrated together, for example, integrated into one chip. The memory 1812 can store program code for performing the technical solutions in embodiments of this application, and execution is controlled by the processor 1811. Various types of executed computer program code may also be considered as a driver of the processor 1811.

FIG. 18 shows only one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 1813 may be configured to support receiving or sending of a radio frequency signal between the network device and a terminal, and the transceiver 1813 may be connected to the antenna 1815. The transceiver 1813 includes a transmitter Tx and a receiver Rx. Specifically, the one or more antennas 1815 may receive a radio frequency signal, and the receiver Rx of the transceiver 1813 is configured to receive the radio frequency signal from the antenna, convert the radio frequency signal into a digital baseband signal or a digital medium-frequency signal, and provide the digital baseband signal or the digital medium-frequency signal to the processor 1811, so that the processor 1811 performs further processing, for example, demodulation processing and decoding processing, on the digital baseband signal or the digital medium-frequency signal. In addition, the transmitter Tx in the transceiver 1813 is further configured to receive a modulated digital baseband signal or digital medium-frequency signal from the processor 1811, convert the modulated digital baseband signal or digital medium-frequency signal into a radio frequency signal, and send the radio frequency signal by using the one or more antennas 1815. Specifically, the receiver Rx may selectively perform one or more levels of down-mixing processing and analog-to-digital conversion processing on the radio frequency signal to obtain the digital baseband signal or the digital medium-frequency signal. A sequence of the down-mixing processing and the analog-to-digital conversion processing is adjustable. The transmitter Tx may selectively perform one or more levels of up-mixing processing and digital-to-analog conversion processing on the modulated digital baseband signal or digital medium-frequency signal to obtain the radio frequency signal. A sequence of the up-mixing processing and the digital-to-analog conversion processing is adjustable. The digital baseband signal and the digital medium-frequency signal may be collectively referred to as a digital signal.

The transceiver may also be referred to as a transceiver unit, a transceiver machine, a transceiver apparatus, or the like. Optionally, a component configured to implement a receiving function in the transceiver unit may be considered as a receiving unit, and a component configured to implement a sending function in the transceiver unit may be considered as a sending unit. In other words, the transceiver unit includes a receiving unit and a sending unit. The receiving unit may also be referred to as a receiver, an input port, a receiving circuit, or the like. The sending unit may be referred to as a transmitter machine, a transmitter, a transmission circuit, or the like.

It should be noted that the network device shown in FIG. 18 may be specifically configured to implement the steps implemented by the network device in the foregoing method embodiments, and implement technical effects corresponding to the network device. For a specific implementation of the network device shown in FIG. 18, refer to the descriptions in the foregoing method embodiments. Details are not described herein again.

An embodiment of this application further provides a computer-readable storage medium that stores one or more computer-executable instructions. When the computer-executable instructions are executed by a processor, the processor performs the method in the possible implementations of the terminal device in the foregoing embodiments.

An embodiment of this application further provides a computer-readable storage medium that stores one or more computer-executable instructions. When the computer-executable instructions are executed by a processor, the processor performs the method in the possible implementations of the network device in the foregoing embodiments.

An embodiment of this application further provides a computer program product (or referred to as a computer program) that stores one or more computers. When the computer program product is executed by a processor, the processor performs the method in the possible implementations of the foregoing terminal device.

An embodiment of this application further provides a computer program product that stores one or more computers. When the computer program product is executed by a processor, the processor performs the method in the possible implementations of the foregoing network device.

An embodiment of this application further provides a chip system. The chip system includes at least one processor, configured to support a terminal device in implementing functions in the foregoing possible implementations of the terminal device. Optionally, the chip system further includes an interface circuit, and the interface circuit provides program instructions and/or data for the at least one processor. In a possible design, the chip system may further include a memory. The memory is configured to store program instructions and data that are necessary for the terminal device. The chip system may include a chip, or may include a chip and another discrete component.

An embodiment of this application further provides a chip system. The chip system includes at least one processor, configured to support a network device in implementing functions in the foregoing possible implementations of the network device. Optionally, the chip system further includes an interface circuit, and the interface circuit provides program instructions and/or data for the at least one processor. In a possible design, the chip system may further include a memory. The memory is configured to store program instructions and data that are necessary for the network device. The chip system may include a chip, or may include a chip and another discrete component. The network device may be specifically the network device in the foregoing method embodiments.

An embodiment of this application further provides a communication system. The network system architecture includes the terminal device and the network device in any one of the foregoing embodiments.

In the several embodiments provided in this application, it should be understood that the disclosed system, apparatus, and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments.

In addition, function units in embodiments of this application may be integrated into one processing unit, or each unit may exist alone physically, or two or more units may be integrated into one unit. The integrated unit may be implemented in a form of hardware, or may be implemented in a form of a software function unit. When the integrated unit is implemented in a form of a software function unit and sold or used as an independent product, the integrated unit may be stored in a computer-readable storage medium. Based on such an understanding, the technical solutions of this application essentially, or the contributing part, or all or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of embodiments of this application. However, the protection scope of embodiments of this application is not limited thereto. Any change or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A cell reselection method, comprising:
determining, by a terminal device, priority information of a target network slice group, wherein the priority information indicates a priority of the target network slice group; and
performing, by the terminal device, cell reselection based on a cell frequency that is associated with the target network slice group and determined based on the priority information.

2. The method according to claim 1, wherein the target network slice group comprises a network slice that the terminal device expects to access.

3. The method according to claim 2, wherein the network slice that the terminal device expects to access comprises at least one of the following:
a network slice indicated by an allowed network slice selection assistance information NSSAI information element, a network slice indicated by a requested NSSAI information element, a network slice indicated by a suspended NSSAI information element, or a network slice related to a mobile originated traffic service.

4. The method according to claim 1, wherein the target network slice group comprises a default network slice.

5. The method according to claim 4, wherein the target network slice group is determined based on a correspondence between a network slice and a network slice group, and when the correspondence between a network slice and a network slice group is invalid in a first area in which the terminal device is currently located, the target network slice group comprises the default network slice, wherein the first area comprises a registration area RA, a tracking area TA, or a public land mobile network PLMN area.

6. The method according to any one of claims 1 to 5, wherein the method further comprises:
determining the target network slice group based on one of the following:
determining, by a non-access stratum NAS of the terminal device, the target network slice group based on an identifier of the network slice that the terminal device expects to access and the correspondence between a network slice and a network slice group; or
sending, by a NAS of the terminal device, an identifier of the network slice that the terminal device expects to access and the correspondence between a network slice and a network slice group to an AS of the terminal device, and determining, by the AS of the terminal device, the target network slice group based on the identifier of the network slice and the correspondence.

7. The method according to any one of claims 1 to 6, wherein the determining, by a terminal device, priority information of a target network slice group comprises:
receiving, by the terminal device, the priority information from a network device.

8. The method according to claim 7, wherein the priority information is carried in a NAS message.

9. The method according to any one of claims 1 to 8, wherein the method further comprises:
determining the priority information of the target network slice group based on one of the following:
receiving, by the NAS of the terminal device, priority information of a network slice group from the network device, and determining, by the NAS of the terminal device, the priority information of the target network slice group based on the target network slice group and the priority information of the network slice group; or
receiving, by the NAS of the terminal device, priority information of a network slice group from the network device, sending the priority information of the network slice group to the AS of the terminal device, and determining, by the AS of the terminal device, the priority information of the target network slice group based on the target network slice group and the priority information of the network slice group.

10. The method according to any one of claims 1 to 9, wherein the determining, by a terminal device, priority information of a target network slice group comprises:
determining, by the terminal device, the priority information based on information about a historically used network slice.

11. The method according to any one of claims 1 to 10, wherein
the priority information is determined based on a quantity and/or priority information of network slices comprised in each network slice group in the target network slice group.

12. The method according to any one of claims 1 to 11, wherein the performing, by the terminal device, cell reselection based on a cell frequency that is associated with the target network slice group and determined based on the priority information comprises:
performing, by the terminal device, cell reselection based on a target cell frequency, wherein the target cell frequency is one or more cell frequencies that are indicated by the priority information and associated with a network slice group with a highest priority in the target network slice group.

13. The method according to claim 12, wherein the method further comprises:
receiving, by the terminal device, indication information from the network device, wherein the indication information indicates to perform cell reselection based on a frequency priority corresponding to a first cell frequency after cell reselection performed based on the target cell frequency fails, wherein
the first cell frequency comprises at least one of the following:
a cell frequency associated with one or more network slices comprised in a network slice set, wherein the network slice set comprises the network slice that the terminal device expects to access;
a cell frequency that is not associated with a network slice;
a cell frequency associated with one or more network slice groups comprised in a network slice group set, wherein the network slice group set comprises a network slice group corresponding to the network slice that the terminal device expects to access;
a cell frequency that is not associated with a network slice group; or
a cell frequency that is indicated by the priority information and associated with one or more network slice groups other than the network slice group with the highest priority in the target network slice group.

14. The method according to claim 13, wherein the indication information comprises at least one of the following:
a quantity of times of performing cell reselection based on the first cell frequency, duration of performing cell reselection based on the first cell frequency, a start moment of performing cell reselection based on the first cell frequency, or an end moment of performing cell reselection based on the first cell frequency.

15. A cell reselection method, comprising:
determining, by a network device, priority information of a target network slice group, wherein the priority information indicates a priority of the target network slice group; and
sending, by the network device, the priority information to a terminal device.

16. A communication apparatus, comprising a processing unit, wherein
the processing unit is configured to determine priority information of a target network slice group, wherein the priority information indicates a priority of the target network slice group; and
the processing unit is configured to perform cell reselection based on a cell frequency that is associated with the target network slice group and determined based on the priority information.

17. The apparatus according to claim 16, wherein the target network slice group comprises a network slice that a terminal device expects to access.

18. The apparatus according to claim 17, wherein the network slice that the terminal device expects to access comprises at least one of the following:
a network slice indicated by an allowed network slice selection assistance information NSSAI information element, a network slice indicated by a requested NSSAI information element, a network slice indicated by a suspended NSSAI information element, or a network slice related to a mobile originated traffic service.

19. The apparatus according to claim 16, wherein the target network slice group comprises a default network slice.

20. The apparatus according to claim 19, wherein the target network slice group is determined based on a correspondence between a network slice and a network slice group, and when the correspondence between a network slice and a network slice group is invalid in a first area in which the terminal device is currently located, the target network slice group comprises the default network slice, wherein the first area comprises a registration area RA, a tracking area TA, or a public land mobile network PLMN area.

21. The apparatus according to any one of claims 16 to 19, wherein
the processing unit is configured to control a non-access stratum NAS of the terminal device corresponding to the communication apparatus to determine the target network slice group based on an identifier of the network slice that the terminal device expects to access and the correspondence between a network slice and a network slice group; or
the processing unit is configured to control a NAS of the terminal device corresponding to the communication apparatus to send an identifier of the network slice that the terminal device expects to access and the correspondence between a network slice and a network slice group to an AS of the terminal device corresponding to the communication apparatus, and the AS determines the target network slice group based on the identifier of the network slice and the correspondence.

22. The apparatus according to any one of claims 16 to 21, wherein the apparatus further comprises a transceiver unit, and that the processing unit is configured to determine priority information of a target network slice group comprises:
the processing unit is configured to receive the priority information from a network device through the transceiver unit.

23. The apparatus according to claim 22, wherein the priority information is carried in a NAS message.

24. The apparatus according to any one of claims 16 to 23, wherein
the processing unit is configured to control the NAS of the terminal device corresponding to the communication apparatus to receive priority information of a network slice group from the network device, and the NAS of the terminal device determines the priority information of the target network slice group based on the target network slice group and the priority information of the network slice group; or
the processing unit is configured to control the NAS of the terminal device corresponding to the communication apparatus to receive priority information of a network slice group from the network device, and send the priority information of the network slice group to the AS of the terminal device corresponding to the communication apparatus, and the AS of the terminal device determines the priority information of the target network slice group based on the target network slice group and the priority information of the network slice group.

25. The apparatus according to any one of claims 16 to 24, wherein that the processing unit is configured to determine priority information of a target network slice group comprises:
the processing unit is configured to determine the priority information based on information about a historically used network slice.

26. The apparatus according to any one of claims 16 to 25, wherein the processing unit is specifically configured to:
perform cell reselection based on a target cell frequency, wherein the target cell frequency is one or more cell frequencies that are indicated by the priority information and associated with a network slice group with a highest priority in the target network slice group.

27. The apparatus according to claim 26, wherein the transceiver unit is further configured to:
receive indication information from the network device, wherein the indication information indicates to perform cell reselection based on a frequency priority corresponding to a first cell frequency after cell reselection performed based on the target cell frequency fails, wherein
the first cell frequency comprises at least one of the following:
a cell frequency associated with one or more network slices comprised in a network slice set, wherein the network slice set comprises the network slice that the terminal device expects to access;
a cell frequency that is not associated with a network slice;
a cell frequency associated with one or more network slice groups comprised in a network slice group set, wherein the network slice group set comprises a network slice group corresponding to the network slice that the terminal device expects to access;
a cell frequency that is not associated with a network slice group; or
one or more cell frequencies that are indicated by the priority information and associated with a network slice group other than the network slice group with the highest priority in the target network slice group.

28. The apparatus according to claim 27, wherein the indication information comprises at least one of the following:
a quantity of times of performing cell reselection based on the first cell frequency, duration of performing cell reselection based on the first cell frequency, a start moment of performing cell reselection based on the first cell frequency, or an end moment of performing cell reselection based on the first cell frequency.

29. A communication apparatus, comprising a processing unit and a transceiver unit, wherein
the processing unit is configured to determine priority information of a target network slice group, wherein the priority information indicates a priority of the target network slice group; and
the transceiver unit is configured to send the priority information.

30. A communication apparatus, wherein the communication apparatus comprises:
a memory, configured to store computer instructions; and
a processor, configured to execute a computer program or the computer instructions stored in the memory, so that the communication apparatus performs the method according to any one of claims 1 to 14.

31. A communication apparatus, wherein the communication apparatus comprises:
a memory, configured to store computer instructions; and
a processor, configured to execute a computer program or the computer instructions stored in the memory, so that the communication apparatus performs the method according to claim 15.

32. A computer-readable storage medium, wherein the medium stores instructions, and when the instructions are executed by a computer, the method according to any one of claims 1 to 14 is implemented.

33. A computer-readable storage medium, wherein the medium stores instructions, and when the instructions are executed by a computer, the method according to claim 15 is implemented.
